(19) Europäisches Patentamt / European Patent Office / Office européen des brevets

(11) **EP 3 743 849 B1**

(12) **EUROPÄISCHE PATENTSCHRIFT**

(45) Veröffentlichungstag und Bekanntmachung des Hinweises auf die Patenterteilung:
**01.04.2026 Patentblatt 2026/14**

(21) Anmeldenummer: **19703939.9**

(22) Anmeldetag: **24.01.2019**

(51) Internationale Patentklassifikation (IPC):
**G06V 40/13** (2022.01)

(52) Gemeinsame Patentklassifikation (CPC):
**G06V 40/1324; G06V 40/1318**

(86) Internationale Anmeldenummer:
**PCT/DE2019/100073**

(87) Internationale Veröffentlichungsnummer:
**WO 2019/144997 (01.08.2019 Gazette 2019/31)**

(54) **VORRICHTUNG ZUR OPTISCHEN DIREKTAUFNAHME VON HAUTABDRÜCKEN UND DOKUMENTEN**

DEVICE FOR DIRECTLY OPTICALLY RECORDING SKIN PRINTS AND DOCUMENTS

DISPOSITIF D'ENREGISTREMENT OPTIQUE DIRECT D'EMPREINTES CUTANÉES ET DE DOCUMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2018 DE 102018101625**

(43) Veröffentlichungstag der Anmeldung:
**02.12.2020 Patentblatt 2020/49**

(73) Patentinhaber: **Dermalog Jenetric GmbH 07749 Jena (DE)**

(72) Erfinder:
• **REINHOLD, Jörg**
  **07743 Jena (DE)**
• **HILLMANN, Jürgen**
  **07745 Jena (DE)**
• **RICHTER, Undine**
  **07749 Jena (DE)**
• **RIEHL, Philipp**
  **07745 Jena (DE)**
• **MORGENEIER, Dirk**
  **07749 Jena (DE)**

(74) Vertreter: **Gleim Petri Patent- und Rechtsanwaltspartnerschaft mbB Neugasse 13 07743 Jena (DE)**

(56) Entgegenhaltungen:
WO-A1-2017/045130     WO-A1-2017/063119
WO-A1-2018/004243     US-A1- 2017 161 543

**Beschreibung**

Die Erfindung betrifft eine Vorrichtung zur optischen Direktaufnahme von sicherheitsrelevanten Objekten, insbesondere Hautabdrücken, vorzugsweise zur Aufnahme von Papillarlinien von Finger- oder Handabdrücken, zur Personenidentifikation, Hautpartien für medizinische Zwecke, Textilien und Lebensmitteln sowie zur Positionserkennung von Fingern auf Displays (z. B. für Mobilgeräte), sowie optional zur Aufnahme von Dokumenten (z. B. Pässen, Führerscheinen und beliebigen anderen Ausweisen, wie Tickets, Bordkarten etc.).

Es gibt verschiedene Konzepte, um Hautabdrücke für Identifikationszwecke aufzunehmen. Die optische Aufnahme von Fingerabdrücken ist zu diesem Zweck weit verbreitet.

Bei den klassischen Systemen des Standes der Technik werden Fingerabdrücke nach dem Prinzip der gestörten internen Totalreflexion (FTIR - Frustrated Total Internal Reflection) aufgenommen. Die dazu verwendeten Vorrichtungen besitzen linsenbasierte Optiken zur Abbildung und ein Prisma, in das Licht unter einem Winkel eingekoppelt wird, so dass es an dessen Oberfläche intern total reflektiert wird. Wird ein Finger auf die Auflagefläche gelegt, so wird das Licht an den Stellen, an denen die Papillarlinien (Hautberge) die Fläche berühren, aus dem Prisma in den Finger ausgekoppelt. Bildet man die Oberfläche des Prismas ab, so entsteht ein (inverses) Bild der Papillarlinien: an den Stellen, an denen sich die Papillartäler (Hauttäler) befinden, gelangt Licht auf den Sensor. Von den Stellen, an denen sich die Hautberge befinden, gelangen lediglich sehr geringe Anteile des an den Hautbergen zurückgestreuten Lichtes auf den Sensor.

Durch das Ausnutzen des FTIR-Prinzips entsteht ein sehr hoher Helligkeitskontrast zwischen den Hautbergen und den Hauttälern. In der Praxis werden so Kontrastwerte von über 90 % erreicht. Die Nachteile prismenbasierter Geräte sind jedoch die Größe und das Gewicht des verwendeten massiven Prismas sowie die Dejustieranfälligkeit des optischen Gesamtsystems.

Der Trend zu kleineren, leichteren Fingerabdruckscannern hat zur Entwicklung einer neuen Klasse von kompakten transportablen Systemen geführt, die ebenfalls eine optische qualitative hochwertige (FBI-konforme) Aufnahme von Fingerabdrücken ohne Prismen und linsenbasierte Optiken gestatten. Im Vergleich zu den oben beschriebenen klassischen Prismen-Systemen verwenden diese Systeme große Sensoren, auf die - quasi direkt - der aufzunehmende Hautbereich aufgelegt wird. Ohne klassische Abbildung und ohne Größenskalierung (Vergrößerungsfaktor 1,0) wird ein Bild erzeugt. Diese Systeme werden häufig als Direktscanner, im Folgenden als Direktsensor bezeichnet.

Je nach Ausführungsform des verwendeten Sensors bzw. dessen Beleuchtung können Bilder erzeugt werden, bei denen entweder die Hauttäler hell erscheinen (FTIR-Prinzip) oder die Hautberge hell (Nicht-FTIR-Prinzip) erscheinen. Maßgeblich für die Bildentstehung ist das Winkelspektrum der verwendeten Beleuchtung sowie die Dicke und Brechzahl der optischen Schicht, die sich zwischen dem Sensor und der Auflagefläche des Hautbereichs befindet.

Bei einem FTIR-Direktbildaufnehmer enthält die Beleuchtung idealerweise ausschließlich Beleuchtungswinkel, die an der Auflagefläche intern total reflektiert werden. An den Stellen der Hauttäler gelangt somit 100 % des intern auf die Auflagefläche treffenden Lichtes zurück in Richtung des Sensors. An den Stellen, an denen die Hautberge die Auflagefläche berühren, koppeln Anteile der Beleuchtung in die Haut ein und werden gestreut (gestörte Totalreflexion). Das diffus rückgestreute Licht von der Hautoberfläche beträgt rund 40 %. Dieser Anteil des zurückgestreuten Lichts wird aufgrund des großen Öffnungswinkels (von 180°) der einzelnen lichtempfindlichen Sensorelemente ebenfalls detektiert. Danach ergibt sich für Direktscanner nach dem FTIR-Prinzip ein maximaler Michelson-Kontrast zu:

$$K_m = \frac{100\% - 40\%}{100\% + 40\%} \approx 43\% \ .$$

Bei einem Direktscanner, der nicht nach dem FTIR-Prinzip arbeitet, enthält die Beleuchtung idealerweise keine Beleuchtungswinkel, die an der Auflagefläche intern total reflektiert werden. Ein aufgelegter Hautbereich wird durch die Auflagefläche hindurch beleuchtet und das diffus rückgestreute Licht von den lichtempfindlichen Elementen detektiert. Die Hautberge erscheinen im Bild heller als die Hauttäler, das Bild ist also im Vergleich zu FTIR-Systemen invertiert. Der Grund dafür ist, dass bei der Detektion des aus den Hauttälern rückgestreuten Lichtes zusätzliche Brechzahlübergänge vorliegen. Das Licht durchläuft den Weg von der Hautoberfläche ($n \approx 1{,}3$) in einen Luftbereich ($n = 1{,}0$) im Hauttal und anschließend in die oberste Schicht ($n \approx 1{,}5$) des Direktscanners. Streulichtsimulationen ergeben hier für die Hauttäler einen Anteil von ca. 20 % vom eingestrahlten Licht, bei den Hautbergen einen Anteil von 40 %. Der maximale Michelson-Kontrast für diese Systeme beträgt also nur rund:

$$K_m = \frac{40\% - 20\%}{40\% + 20\%} \approx 33\% \ .$$

Mit keinem der beiden beschriebenen Direktaufnahmeprinzipien können ohne weitere Maßnahmen Kontrastwerte im Bereich der klassischen prismenbasierten Geräte erzeugt werden, da es keinen klassischen optischen Abbildungskanal gibt und somit auch sämtliches nicht erwünschtes Streulicht detektiert wird, da der Öffnungswinkel der lichtempfindlichen Elemente der Direktscanner ohne zusätzliche Aufwände nahezu 180° beträgt.

Der geringe Grundkontrast im Vergleich zu FTIR-Systemen mit Prisma macht die Direktscanner weniger robust gegenüber ungünstigen Aufnahmebedingungen, wie z. B. starkes Umgebungslicht oder unterschiedliche Hauttypen.

Im Stand der Technik ist eine erste Gruppe von Lösungen mit kontrastverbessernden Elementen aus den Schriften US 2017/0161540 A1, US 2017/0161543 A1 und US 2017/0161544 A1 bekannt, bei denen die lichtempfindlichen Elemente durch Einsatz winkelselektiver Elemente gezielt nur einen gewünschten Winkelbereich detektieren können. Diese Lösungen haben allerdings den Nachteil, dass der gewünschte Winkelbereich erst durch mehrere Schichten bzw. durch gewölbte Oberflächen eingeschränkt werden kann, wodurch die Herstellung solcher Direktbildaufnehmer komplex und teuer ist.

Ein anderer Ansatz zur Lösung des Kontrastproblems liegt darin, Licht aus den Hauttälern zu empfangen, indem durch den Pinhole-Charakter von winkelselektiven Elementen bevorzugt Licht aus kleinen Öffnungswinkeln nahe der Flächennormalen der Auflagefläche detektiert wird, wie beispielsweise in den Schriften WO 2017/045130 A1, WO 2017/063119 A1, US 2017/0017824 A1 und US 2016/0224819 A1 beschrieben. In derartigen Ausführungen kann der Michelson-Kontrast der aufgenommenen biometrischen Objekte niemals annähernd 100 % erreichen, da ständig ein Teil des remittierten Lichts der Hautberge mitdetektiert wird.

Die WO 2018/004243 A1 (nachveröffentlichte US 2019/0228204 A1) offenbart ein Display mit Fingerabdruckdetektion, bei dem die Vorgabe des Lichtweges für das Strahlenbündel bis zum Detektorelement mittels definiert abgeschrägter Prismenstrukturen der Displayschicht erfolgt. Dadurch wird für das zu detektierende Bündel ein selektiver schräger Lichteintritt in die Detektorschicht ermöglicht, um durch einen mittels Blendenstapel erzeugten Lichtkanal das Detektorelement zu erreichen. Nachteilig sind dabei die mikrostrukturierte Displayschicht sowie die Vielzahl der dazu angepassten Blendenschichten zur Erzeugung des Lichtkanals für die Selektion des Eintrittswinkels von Licht des Fingerabdrucks, bei dem zwischen Hautbergen und Hauttälern ein erhöhter Kontrast erreicht wird.

Vor diesem Hintergrund liegt der Erfindung die Aufgabe zugrunde, bei Direktsensoren zur Aufnahme von Hautabdrücken Helligkeitsunterschiede zwischen Hautbergen und Hauttälern zu erzeugen, die im Bereich der klassischen FTIR-Systeme mit Prismen liegen (Kontrast über 90 %). Dabei soll die Lösung unkompliziert und einfach in der Herstellung sein. In einer erweiterten Aufgabenstellung soll der gleiche Direktsensor auch Dokumente mit hinreichend hohem Kontrast aufnehmen können.

Die Aufgabe wird bei einer Vorrichtung zur optischen Direktaufnahme von sicherheitsrelevanten Objekten zur Identifikation von Personen, insbesondere von Hautabdrücken, und/oder von einer identifizierten Person zugeordneten Objekten, mit einer Schichtenfolge, enthaltend eine Deckschicht mit einer Auflagefläche für ein aufzunehmendes Objekt, eine Blendenschicht mit nicht transparenten und transparenten Bereichen zur Einschränkung von Einfallswinkeln von Licht, das vom aufzunehmenden Objekt durch die Auflagefläche in die Schichtenfolge remittiert wird, eine Sensorschicht mit in einem zweidimensionalen Raster angeordneten Pixeln, die jeweils ein lichtempfindliches Element und einen transparenten Durchlassbereich aufweisen, wobei die lichtempfindlichen Elemente nur aus Richtung der Auflagefläche kommendes Licht detektieren können, ein Substrat als Träger der Schichtenfolge und eine Beleuchtungsschicht zum Aussenden von Beleuchtungslicht, das durch die Auflagefläche hindurch das Objekt beleuchtet, dadurch gelöst, dass die Blendenschicht als eine Kontrastblendenschicht für einen überwiegenden Durchlass von unter großen Einfallswinkeln einfallendem Licht, das von auf der Auflagefläche ohne Luftspalt aufliegenden Teilen des Objekts direkt remittiert wird, ausgebildet ist, wobei jedem lichtempfindlichen Element der Sensorschicht jeweils genau eine Kontrastblende als nicht transparenter Bereich der Kontrastblendenschicht zugeordnet ist, die jeweils zugeordnete Kontrastblende über einem aktiven Bereich des lichtempfindlichen Elements mit einem Abstand angeordnet ist und eine nicht transparente Fläche aufweist, die mindestens so groß ist wie der aktive Bereich des lichtempfindlichen Elements und die Kontrastblende im Abstand über dem aktiven Bereich des lichtempfindlichen Elements so angeordnet ist, dass - aus Richtung der Auflagefläche betrachtet - der aktive Bereich des lichtempfindlichen Elements zu mindestens 60 % überdeckt ist, und dass die Beleuchtungsschicht eine Vielzahl von Punktlichtquellen enthält, die in Richtung der Auflagefläche in einem derart beschränkten Winkelbereich emittieren, um eine interne Totalreflexion an der Auflagefläche der Deckschicht zu unterdrücken.

Vorteilhaft ist die jeweils zugeordnete Kontrastblende über dem aktiven Bereich des lichtempfindlichen Elements so angeordnet, dass - aus Richtung der Auflagefläche betrachtet - ein aktiver Bereich des lichtempfindlichen Elements zu mindestens 75%, bevorzugt mindestens 90%, überdeckt ist.

In einer weiteren zweckmäßigen Variante ist die jeweils zugeordnete Kontrastblende über dem aktiven Bereich des lichtempfindlichen Elements so angeordnet, dass - aus Richtung der Auflagefläche betrachtet - der aktive Bereich des lichtempfindlichen Elements vollständig überdeckt ist.

Für eine raumsparende Ausführung des erfindungsgemäßen Direktsensors erweist es sich als vorteilhaft, dass die Deckschicht als das transparente Substrat für die gesamte Schichtfolge ausgebildet ist.

In einer weiteren bevorzugten Gestaltungsvariante ist die jeweils zugeordnete Kontrastblende über dem aktiven Bereich des lichtempfindlichen Elements so ausgebildet, dass die Kontrastblende in mindestens zwei um 90° versetzten Richtungen des Pixelrasters einen Überstand gegenüber dem aktiven Bereich des lichtempfindlichen Elements aufweist. Insbesondere kann die Kontrastblende eine zu dem aktiven Bereich des lichtempfindlichen Elements parallele, geometrisch ähnliche Fläche mit gleicher Ausrichtung im Sinne einer Zentralprojektion aufweisen. Dabei sind bevorzugt ausgewählte Flächen für die Kontrastblende und den aktiven Bereich des lichtempfindlichen Elements die Formen Rechteck, Quadrat, Ellipse oder Kreis.

Für wechselnde Anforderungen an sicherheitsrelevante Objekte erweist es sich als Vorteil, wenn die Kontrastblende und der aktive Bereich des lichtempfindlichen Elements parallele, geometrische Flächen mit voneinander abweichender Form aufweisen. Dabei können die Kontrastblende und der aktive Bereich unterschiedliche Formen aus den Flächenformen Rechteck, Quadrat, Ellipse oder Kreis sein.

Zur Kontrast- und Auflösungsverbesserung von Hautabdrücken weisen die Flächen der Kontrastblenden gegenüber den aktiven Bereichen der lichtempfindlichen Elemente zweckmäßig einen Überstand auf, der in seiner Größe eingestellt ist in Abhängigkeit von der Brechzahl der Deckschicht, von dem Abstand der Kontrastblenden über dem aktiven Bereich der lichtempfindlichen Elemente und von der Form der Kontrastblende und des aktiven Bereichs des lichtempfindlichen Elements.

Um verschiedene Aufnahmemodi für Aufnahmen von unterschiedlichen Objekten realisieren zu können, erweist es sich als vorteilhaft, dass die Kontrastblendenschicht zwei oder mehrere verschiedene Kontrastblenden abwechselnd und versetzt zueinander in einem mit dem Pixelraster übereinstimmenden Raster über den aktiven Bereichen der lichtempfindlichen Elemente aufweist. Dies ist bevorzugt für Aufnahmen unterschiedlicher Objekte, die von Fingern mit unterschiedlichem Hauttyp, wie normaler und feuchter oder heller und dunkler Haut bis zu Dokumenten unterschiedliche Art reichen können.

Um Aufnahmen mit erhöhter Auflösung zu erreichen und die Aufnahme von Dokumenten als sicherheitsrelevante Objekte zu verbessern, weist die Kontrastblende vorteilhaft in drei um 90° versetzten Richtungen innerhalb der Kontrastblendenschicht einen gleichen Überstand gegenüber dem aktiven Bereich des lichtempfindlichen Elements und in einer vierten um 90° versetzten Richtung einen geringeren Überstand, der gegen Null gehen kann, auf.

In einer dazu weiter verbesserten Variante, bei der die Aufnahme mit in zwei Dimensionen gleicher erhöhter Auflösung erreicht und die Aufnahme von Dokumenten verbessert werden kann, weist die Kontrastblende zweckmäßig in zwei um 90° versetzten Richtungen innerhalb der Kontrastblendenschicht einen gleichen Überstand zu dem aktiven Bereich des lichtempfindlichen Elements und in zwei gegenüberliegend zu den zwei um 90° versetzten Richtungen einen geringeren Überstand, der gegen Null gehen kann, auf.

Der Abstand der Kontrastblenden zu den lichtempfindlichen Elementen wird vorzugsweise mittels einer zusätzlichen Abstandsschicht mit wählbarer Schichtdicke eingestellt. Dabei ist der Abstand der Kontrastblenden über den lichtempfindlichen Elementen zweckmäßig in einem Bereich zwischen 10 nm und 1 mm einstellbar. Vorzugsweise wird der Abstand in einem Bereich von 0,5 µm bis 50 µm eingestellt, wobei besonders bevorzugt der Abstand durch Einstellung einer Schichtdicke zwischen 1 µm und 10 µm realisiert wird.

Die Beleuchtungsschicht ist vorteilhaft als eine unterhalb der Sensorschicht mit einer Zwischenschicht oder einer Luftschicht an die Schichtenfolge gekoppelte großflächige Hintergrundbeleuchtung ausgebildet. Dabei ist die großflächige Beleuchtungsschicht bevorzugt ein Display, das vorzugsweise über eine Luftschicht an die unterste Schicht der Schichtenfolge gekoppelt ist. Die unterste Schicht kann entweder ein transparentes Substrat sein oder es ist die Sensorschicht, falls die Deckschicht als Substrat ausgebildet ist.

In einer alternativen Gestaltungsvariante kann die Beleuchtungsschicht vorteilhaft als innerhalb der Sensorschicht versetzt in den Durchlassbereichen der Pixel singulär angeordnete, mit bündelbegrenzenden Blenden ausgestattete Punktlichtquellen ausgebildet sein. Dabei können in der Sensorschicht Punktlichtquellen in Form von LEDs, OLEDs und QLEDs eingesetzt sein.

In einer speziellen vorteilhaften Gestaltungsform ist die Kontrastblendenschicht für den überwiegenden Durchlass von unter großen Einfallswinkeln einfallendem Licht, das von auf der Auflagefläche ohne Luftspalt aufliegenden Teilen des Objekts remittiert wird, und einen zusätzlichen geringen Anteil von unter kleinen Einfallswinkeln einfallendem Licht, der von auf der Auflagefläche mit Luftspalt aufliegenden Teilen des Objekts remittiert wird, ausgebildet, wobei die jeweils zugeordnete Kontrastblende über dem aktiven Bereich des lichtempfindlichen Elements so angeordnet ist, dass - aus Richtung der Auflagefläche betrachtet - der aktive Bereich des lichtempfindlichen Elements vollständig überdeckt ist, und die Kontrastblende innerhalb einer den aktiven Bereich überdeckenden nicht transparenten Fläche eine Ausnehmung aufweist, sodass im Bereich der Ausnehmung zusätzlich ein geringer Anteil von im Wesentlichen senkrecht auftreffendem Licht aufnehmbar ist.

In einer zweckmäßigen Gestaltung der Kontrastblende ist die Ausnehmung bevorzugt eine innerhalb der den aktiven Bereich des lichtempfindlichen Elements überdeckenden Fläche der Kontrastblende eingebrachte Ausnehmung in Form von Kreisloch, Langloch, Schlitz, Kerbe, Sektor oder anders geformtem Ausschnitt.

In einer weiteren vorteilhaften Gestaltung der Kontrastblende ist die Ausnehmung eine in einem zum aktiven Bereich vorhandenen Überstand der Kontrastblende eingebrachte Ausnehmung in Form von Kreisloch, Langloch, Schlitz, Kerbe, Sektor oder anders geformter Ausschnitt.

Die Erfindung basiert auf der Grundüberlegung, dass bei der Aufnahme von Objekten zur Personenidentifikation, z. B. Finger-, Hand- oder Fußabdrücken, die biometrischen Merkmale, die Papillarlinien, auf unterschiedliche Weise aufgenommen werden können. Bei optischen Direktsensoren zur Aufnahme von Hautabdrücken stehen die Papillarlinien mit der Auflagefläche eines Sensors direkt in Kontakt, wobei der Kontrast zwischen Hautbergen und Hauttälern durch deren unterschiedliche Brechzahlübergänge an der Auflagefläche entsteht. Wesentlich für das Erreichen der Qualitätsvorgaben des FBI (nach EBTS Appendix F) ist der Kontrast zwischen Papillarleisten (Hautbergen) und Papillartälern (Hauttälern) des Hautabdrucks. Ein theoretischer Maximalkontrast bei einem optischen Direktsensor mit diffuser Beleuchtung, der gemäß oben genannter Formel nur 33 % erreichen kann, ist offensichtlich zu niedrig, wenn man bedenkt, dass ein hoher Kontrast die erste Grundvoraussetzung für eine hohe Bildqualität ist. Obgleich mit einem Grundkontrast von 50 % unter Idealbedingungen FBI-konforme Bilder erzeugt werden können, bietet ein höherer Grundkontrast im unverarbeiteten Bild Reserven, die auch bei schlechten Randbedingungen (trockene oder feuchte Haut, dunkle Hauttypen, Umgebungslicht oder eine verschmutzte Auflagefläche) die geforderte hohe Bildqualität sicherstellen.

Die Erfindung löst das prinzipiell bei Direktsensoren bestehende Problem eines zu niedrigen Kontrastes mit Hilfe eines neuen Detektionsprinzips der optischen Aufnahme.

Das Grundprinzip ist dabei, dass das zurückgestreute (remittierte) Licht vom auf der Auflagefläche aufliegenden Objekt erfasst wird und dabei von der Möglichkeit Gebrauch gemacht wird, dass auf dem Weg von der Auflagefläche der Vorrichtung bis zu den lichtempfindlichen Elementen einer großflächigen Sensorschicht das remittierte Licht oder ein Anteil davon durch winkelselektive Elemente modifiziert werden kann. Erfindungsgemäß wird der Öffnungswinkel der lichtempfindlichen Elemente so verändert, dass die Detektion bestimmter Winkelbereiche des remittierten Lichts vom aufliegenden Objekt bevorzugt bzw. verhindert wird. Insbesondere werden Streulichtanteile, die aus beiden unterschiedlichen Hautpartien, den Hautbergen und den Hauttälern, im selben Winkelbereich remittiert werden, nicht zur Detektion zugelassen, wodurch sich ein höherer Kontrast realisieren lässt, indem lediglich ein Überschussanteil des aus den Hautbergen stammenden Streulichts, der als remittiertes Licht unter größeren Winkeln in den Direktbildaufnehmer eintritt, zur Signalaufnahme verwendet wird. Dies geschieht, indem dasjenige von den Hautpartien remittierte Streulicht, das unter kleinen Einfallswinkeln auf die lichtempfindlichen Elemente einfällt, durch je eine die lichtempfindlichen Elemente im Wesentlichen zentral abdeckende Kontrastblende blockiert (abgeschattet) wird.

Mit der Erfindung ist es möglich, bei Direktscannern zur Aufnahme von Hautabdrücken die Helligkeitsunterschiede zwischen Hautbergen und Hauttälern so zu verbessern, dass sie im Bereich der klassischen FTIR-Systeme mit Prismen liegen (Kontrast über 90%). Die Erfindung löst auch die erweiterte Aufgabe, mit demselben Direktsensor Dokumente mit hinreichend hohem Kontrast aufzunehmen.

Die Erfindung soll nachstehend anhand von Ausführungsbeispielen näher erläutert werden. Die Zeichnungen zeigen:

Fig. 1:     einen prinzipiellen Aufbau der erfindungsgemäßen Vorrichtung zur Aufnahme von Hautabdrücken,

Fig. 2a:    eine Seitenansicht (Schnittdarstellung) einer bevorzugten Ausführungsform der erfindungsgemäßen Vorrichtung, bei der die Beleuchtungsschicht in Form einer Vielzahl von Punktlichtquellen in die Sensorschicht integriert ist,

Fig. 2b:    eine Seitenansicht (Schnittdarstellung) einer weiteren Ausführungsform der erfindungsgemäßen Vorrichtung, bei der die Beleuchtungsschicht in Form einer Vielzahl von Punktlichtquellen in die Sensorschicht integriert ist und die Deckschicht zugleich das Substrat für die Schichtenfolge darstellt,

Fig. 3:     eine Seitenansicht (Schnittdarstellung) einer weiteren bevorzugten Ausführungsform der erfindungsgemäßen Vorrichtung, bei der die Beleuchtungsschicht mit einem Display als Hintergrundbeleuchtung unterhalb des Substrats angekoppelt ist,

Fig. 4a:    eine schematische Darstellung der Grenzwinkel für einen streifenden Lichteinfall für die unterschiedlichen Medienübergänge von Hautberg und Hauttal an der Auflagefläche als Grenzfläche,

Fig. 4b:    eine schematische Darstellung der Überlagerung der unterschiedlichen Grenzwinkel für den Streulichteintritt aus Hautberg und Hauttal in die Deckschicht, stilisiert an einer Stelle der Auflagefläche zur Verdeutlichung des Differenzwinkelbereichs,

Fig. 5:     eine Seitenansicht (als schematische Schnittdarstellung) der erfindungsgemäßen Vorrichtung in einer Ausführungsform zur Aufnahme eines Dokuments, das mit in der Sensorschicht enthaltenen Punktlichtquellen beleuchtet wird,

Fig. 6:     einen schematischen Ausschnitt der erfindungsgemäßen Vorrichtung mit lichtempfindlichen Elementen ohne Diodenblendenschicht und mit vollständig überdeckender Kontrastblende zur Aufnahme eines Doguments, das von unterhalb der Sensorschicht mit einer Beleuchtungsschicht als Hintergrundlicht beleuchtet ist,

Fig. 7a:     eine Draufsicht auf eine erste Ausführungsform eines lichtempfindlichen Elements mit Diodenblende und Kontrastblende,

Fig. 7b:     eine Seitenansicht als Schnittdarstellung der Ausführungsform von Fig. 7a,

Fig. 8a:     eine Draufsicht auf das lichtempfindliche Element analog zu Fig. 7a bei Verwendung einer quadratischen Kontrastblende mit einem definierten symmetrischen Überstand gegenüber einem von der Diodenblende freigelassenen aktiven Bereich,

Fig. 8b:     eine Draufsicht auf das lichtempfindliche Element in einer zweiten Ausführungsform einer quadratischen Kontrastblende, bei welcher der Überstand in einer Richtung durch eine Ausnehmung verringert ist,

Fig. 8c:     eine Draufsicht auf das lichtempfindliche Element in einer dritten Ausführungsform einer kreisförmigen Kontrastblende über einem kreisförmigen aktiven Bereich, bei welcher der gleichmäßige Überstand in einer Richtung durch eine sektorförmige Ausnehmung unterbrochen und der aktive Bereich nicht vollständig abgedeckt ist,

Fig. 8d:     eine Draufsicht auf das lichtempfindliche Element in einer vierten Ausführungsform einer quadratischen Kontrastblende über einem quadratischen aktiven Bereich, bei welcher der gleichmäßige Überstand für zwei orthogonale Richtungen durch eine rechtwinklige sektorförmige Ausnehmung unterbrochen und der aktive Bereich zu ca. 25 % nicht abgedeckt ist,

Fig. 9:     Draufsichten von weiteren bevorzugten Gestaltungen der erfindungsgemäßen Vorrichtung mit unterschiedlichen Konfigurationen von Kontrastblende und aktivem Bereich der lichtempfindlichen Elemente und

Fig. 10:     eine Seitenansicht und eine Draufsicht eines mobilen Geräts, in das die erfindungsgemäße Vorrichtung integriert ist.

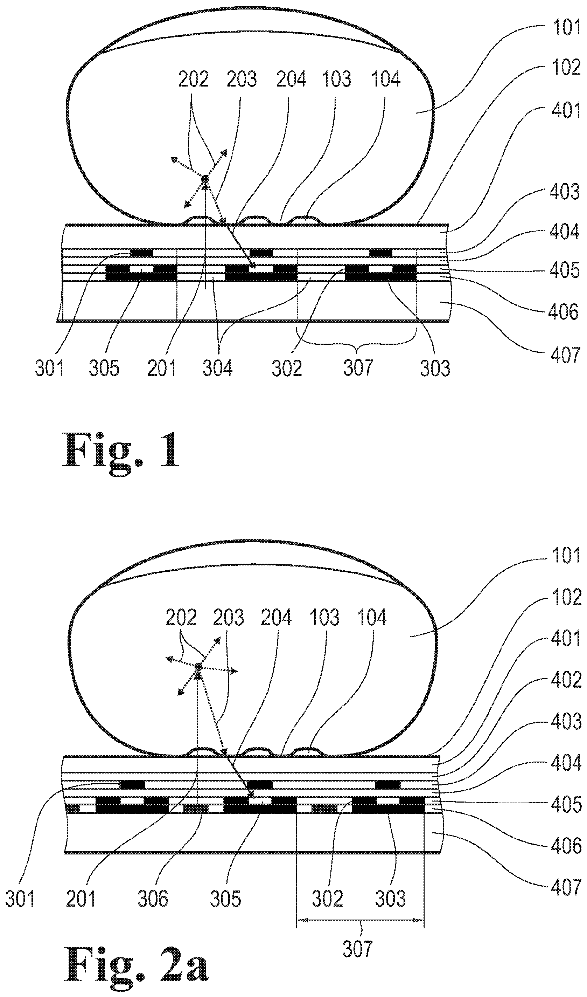

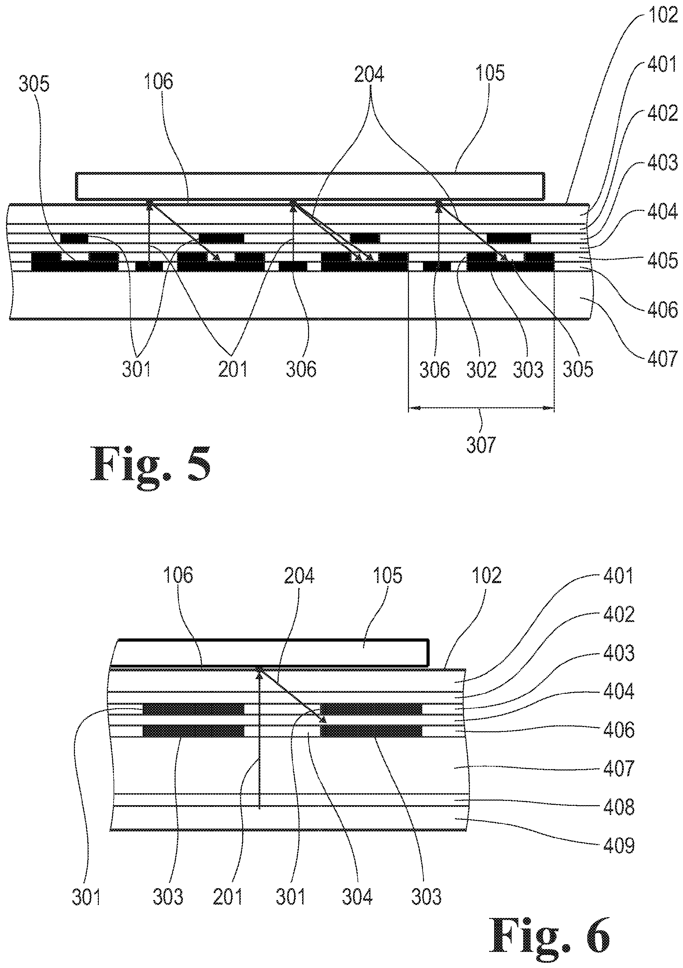

In Fig. 1 ist die Schichtenfolge einer Vorrichtung zur optischen Direktaufnahme von sicherheitsrelevanten Objekten (nachfolgend kurz: optischer Direktsensor) in einer Schnittdarstellung schematisch gezeigt. Sicherheitsrelevante Objekte sind Hautbereiche, wie beispielsweise der Abdruck eines Fingers 101, Hand- oder Fußabdrücke, sowie Dokumente 105 (nur in Fig. 5, 6 und 10 gezeichnet) zur Identifizierung von Personen, wie z. B. Personalausweis, Reisepass, Führerschein, Kredit- oder Visitenkarte.

In Fig. 1 ist ein Finger 101 schematisch mit mehreren Hautbergen 103 und Hauttälern 104 dargestellt, der auf der Auflagefläche 102 des optischen Direktsensors aufgelegt ist. Die Auflagefläche 102 wird zumeist durch die Außenfläche einer widerstandsfähigen transparenten Deckschicht 401 gebildet, auf der auch mehrere Finger 101 gleichzeitig aufgelegt werden können. Zur optischen Aufnahme des aufgelegten Fingers 101 ist in Fig. 1 die Sensorstruktur schematisch anhand von drei Pixeln 307 dargestellt, die jeweils aus einem lichtempfindlichen Element 303 und einem transparenten Durchlassbereich 304 gebildet sind. Ein möglicher Lichtweg von Beleuchtungslicht 201 ist beispielhaft von einem der Durchlassbereiche 304 zur Beleuchtung des Fingers 101 an dessen Unterseite in Richtung der Auflagefläche 102 gerichtet und führt im aufgelegten Objekt, hier im Finger 101, zu punktueller Umwandlung in Streulicht 202, wobei in Richtung der Auflagefläche 102 gerichtetes Streulicht 203 in den Direktsensor als remittiertes Licht 204 eintritt, das von einem lichtempfindlichen Element 303 unter bestimmten Voraussetzungen empfangen werden kann.

Die erfindungsgemäße Vorrichtung umfasst, aus Richtung des Fingers 101 kommend, eine Deckschicht 401 mit der Auflagefläche 102 für die aufzunehmenden Objekte, eine Kontrastblendenschicht 403, eine Abstandsschicht 404, eine Sensorschicht 406 sowie ein Substrat 407.

Das Substrat 407 bildet die Grundlage für den Aufbau der Schichtenfolge des optischen Direktsensors. Mittels photolithographischer Prozesse, die im Stand der Technik als TFT-(thin-film transistor) Technologie bekannt sind, werden Leiter, Halbleiter und Isolatoren auf dem Substrat 407 aufgebracht.

Alternativ ist die Herstellung des optischen Direktsensors auch mittels Druckverfahren möglich, zum Beispiel per Siebdruckverfahren. Das Substrat 407 besteht bevorzugt aus einem transparenten Material, wie Kunststoff oder Glas, um den Durchlass von Beleuchtungslicht 201 zu ermöglichen, das aus Richtung der Durchlassbereiche 304 der Pixel 307 der Sensorschicht 406 kommend durch die gesamte Schichtenfolge und die Auflagefläche 102 hindurch das Objekt, den Finger 101 bzw. das Dokument 105, beleuchtet.

Von dem Substrat 407 getragen ist eine Sensorschicht 406, die in einem regelmäßigen zweidimensionalen Raster angeordnete Pixel 307 aufweist. Jedes Pixel 307 weist ein lichtempfindliches Element 303 zur Umwandlung von Licht in elektrische Signale und einen in diesem Ausführungsbeispiel transparenten Durchlassbereich 304 zur Transmission von Beleuchtungslicht 201 von unterhalb des Substrats 407 auf. Bei den lichtempfindlichen Elementen 303 handelt es sich um Photodioden, die so beschaffen sind, dass sie von unten aus Richtung des Substrats 407 kein Licht detektieren können. Dies wird über eine Blende aus einem nicht transparenten Material an der Unterseite der Photodiode realisiert, wie es im Stand der Technik bekannt und üblich ist. Die lichtempfindlichen Elemente 303 haben gewöhnlich einen Öffnungswinkel von ca. 180° und sind so beschaffen, dass sie Licht eines vorgegebenen Wellenlängenbereichs aus Richtung Auflagefläche 102 erfassen. Bevorzugt detektieren die Pixel 307 einen Wellenlängenbereich im sichtbaren Strahlungsspektrum zwischen 380 und 780 nm. Die Sensorschicht 406 weist zur Aufnahme von FBIkonformen Bildern bevorzugt einen Mittenabstand der lichtempfindlichen Elemente 303 von $\leq$ 50,8 $\mu$m auf, was einer Auflösung von 500 ppi (pixels per inch) oder mehr entspricht.

Die Durchlassbereiche 304 zwischen den lichtempfindlichen Elementen 303 bestehen aus einem für das Beleuchtungslicht 201 mindestens teilweise transparenten Material. Bevorzugt werden transparente Beschichtungsmaterialien, wie Siliziumdioxid oder Aluminiumoxid, verwendet, die beim Beschichtungsvorgang an die Dicke der lichtempfindlichen Elemente 303 angepasst werden. Hierdurch wird die Sensorschicht 406 eingeebnet, bevor sich der nächste Beschichtungsschritt anschließt.

In den meisten Anwendungsfällen des optischen Direktsensors ist es von Vorteil, die wirksame Fläche der lichtempfindlichen Elemente 303 definiert zu begrenzen und in geringem Maße auch den Öffnungswinkel einzuschränken, um die Lichtempfindlichkeit auf das Maß einzustellen, das für den Anwendungsfall benötigt wird, und gleichzeitig ein möglichst großes lichtempfindliches Element 303 für ein besseres Signal-Rausch-Verhältnis zu realisieren. In diesem Fall ist über der Sensorschicht 406 eine Diodenblendenschicht 405 angeordnet, die aus transparenten Bereichen und nicht transparenten Bereichen besteht. Die nicht transparenten Bereiche der Diodenblendenschicht 405 bilden Diodenblenden 302, die einen Flächenanteil vom Rand der lichtempfindlichen Elemente 303 abschatten. Der nicht von der Diodenblende 302 abgedeckte Teil des lichtempfindlichen Elements 303 bildet einen exakt begrenzten aktiven Bereich 305, in dem noch Licht detektiert werden kann. Jedem lichtempfindlichen Element 303 ist genau eine Diodenblende 302 zugeordnet, die den aktiven Bereich 305 des lichtempfindlichen Elements 303 und des Pixels 307 festlegt. Die transparenten Bereiche der Diodenblendenschicht 405 zwischen den Diodenblenden 302 decken sich flächenmäßig mit den Durchlassbereichen 304 der Sensorschicht 406 und bestehen vorzugsweise aus dem gleichen Material wie die Durchlassbereiche 304.

Über der Diodenblendenschicht 405 befindet sich eine transparente Abstandsschicht 404, die einen definierten Abstand zwischen dem aktiven Bereich 305 der lichtempfindlichen Elemente 303 und der Kontrastblendenschicht 403 herstellt. Die Abstandsschicht 404 hat eine Dicke zwischen 0,01-1000 $\mu$m. Vorzugsweise liegt die Dicke der Abstandsschicht 404 zwischen 0,5 $\mu$m und 50 $\mu$m, besonders bevorzugt im Bereich 1-10 $\mu$m. Die Abstandsschicht 404 besteht aus einem transparenten organischen oder anorganischen Material, bevorzugt aus einem organischen Material, um eine bessere einebnende Wirkung und größere Schichtdicken zu erzielen.

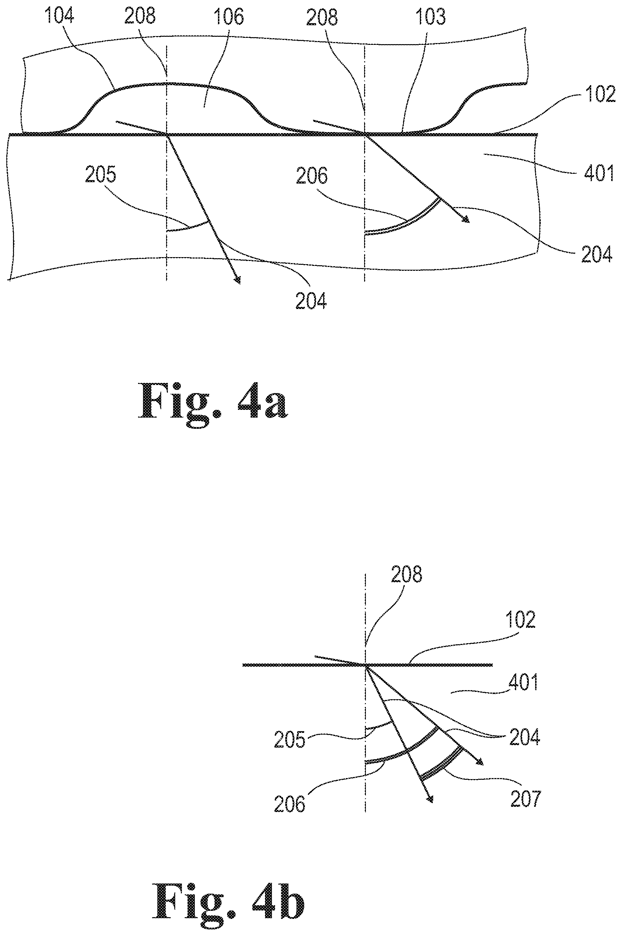

Über der Abstandsschicht 404 ist eine Kontrastblendenschicht 403 angeordnet, die transparente Bereiche und nicht transparente Kontrastblenden 301 aufweist. Jedem lichtempfindlichen Element 303 der Sensorschicht 406 ist genau eine Kontrastblende 301 innerhalb der Kontrastblendenschicht 403 zugeordnet. Die Kontrastblenden 301 decken wesentliche Flächenanteile des aktiven Bereichs 305 der lichtempfindlichen Elemente 303 und Flächenanteile der Diodenblenden 302 ab. Die Kontrastblenden 301 haben für die aktiven Bereiche 305 der lichtempfindlichen Elemente 303 eine einschränkende Wirkung auf die Einfallswinkel von Streulicht 203, das vom Finger 101 über die Auflagefläche 102 in den Direktsensor remittiert wird. Die Kontrastblenden 301 sind für einen bevorzugten Durchlass von Streulicht 203 ausgebildet, das von auf der Auflagefläche 102 ohne Luftspalt 106 aufliegenden Teilen des Fingers 101 direkt remittiert wird und als remittiertes Licht 204 unter großem Einfallswinkel in die aktiven Bereiche 305 der lichtempfindlichen Elemente 303 eintritt. Eine Erläuterung zur Einschränkung der von den lichtempfindlichen Elementen 303 erfassbaren Einfallswinkeln von remittiertem Licht 204 ist nachfolgend zu Fig. 4a und 4b beschrieben.

Zum effektiven Blocken von remittiertem Licht 204 sind nicht transparente Materialien für die Diodenblenden 302 und die Kontrastblenden 301 notwendig. Bevorzugt sind Blendenmaterialien, die aufgrund ihrer guten Strukturierbarkeit in photolithographischen Beschichtungsprozessen Verwendung finden, beispielsweise Metalle wie Chrom, Aluminium, Gold, Molybdän, Kupfer, Silber, Silizium. Aufgrund der Reflexionseigenschaften dieser Materialien kann es jedoch an den Oberflächen der Diodenblenden 302 und Kontrastblenden 301 zu unerwünschten Reflexionen kommen, die sich einschränkend auf den Kontrast auswirken, das Rauschen erhöhen oder Doppelbilder erzeugen. Deshalb werden vorrangig absorbierende organische Materialien, wie z. B. Polytetrafluorethylen, und absorbierende anorganische Materialien, wie diamantähnliche Kohlenstoffschichten, schwarzes Chrom, Kupfer-Indium-Disulfid, oder Materialien mit spezieller Mikrostruktur eingesetzt. Besonders bevorzugt sind Materialien, die sich über Druckverfahren, z. B. per Siebdruck, als Diodenblenden 302 und Kontrastblenden 301 aufbringen lassen, da diese schnell, flexibel sowie kostengünstig herstellbar sind. In Druckverfahren werden hierfür vornehmlich organische Materialien verwendet.

Über der Kontrastblendenschicht 403 befindet sich die Deckschicht 401, die den optischen Direktsensor vor mechanischen und chemischen Belastungen schützt und mit ihrer äußeren Oberfläche die Auflagefläche 102 für Objekte, wie den Finger 101 oder das Dokument 105, bildet. Die Deckschicht 401 hat eine Schichtdicke im Bereich von 1 μm - 10 mm, vorzugsweise 10 μm - 1000 μm und besonders bevorzugt 50 μm - 200 μm. Eine möglichst dicke Deckschicht 401 ist vorteilhaft, um einen besonders guten mechanischen und chemischen Schutz zu gewährleisten. Die Deckschicht 401 sollte darüber hinaus aber noch dünn genug sein, um den Direktsensor gut in mobile Geräte zu integrieren, bei denen eine geringe Gesamtdicke erwünscht ist. Anwenderfreundlich sind Deckschichten 401 aus Kunststoff gefertigt, die vom Nutzer rückstandsfrei entfernbar und austauschbar sind. Besonders bevorzugt sind harte Deckschichten 401, z. B. aus Glas, chemisch vorgespanntem Glas, Quarzglas, Saphir oder Keramik.

Die transparenten Bereiche aller Schichten der Schichtenfolge der erfindungsgemäßen Vorrichtung haben vorzugsweise ähnliche optische Eigenschaften (insbesondere aneinander angeglichene Brechzahlen), um Reflexionsverluste an den Grenzflächen zwischen den Schichten zu minimieren. Bevorzugt liegen die Brechzahlen aller transparenten Schichten bei n = 1,5 ± 0,2.

Zur Verminderung von Reflexionsverlusten zwischen der Deckschicht 401 und der Kontrastblendenschicht 403 kann eine Adhäsionsmittelschicht 402 (nicht in Fig. 1 gezeigt), die eine Brechzahl n = 1,5 ± 0,2 aufweist, vorgesehen sein, welche die Deckschicht 401 optisch an die darunterliegende Schichtenfolge koppelt bzw. bondet. Vorzugsweise ist die Adhäsionsmittelschicht 402 ein optisch transparenter Klebstoff (LOCA - liquid optical clear adhesive) oder eine optisch transparente doppelseitig haftende Folie (OCA - optical clear adhesive). Besonders bevorzugte transparente Klebstoffe basieren auf Acrylaten, Epoxiden und Silikonen.

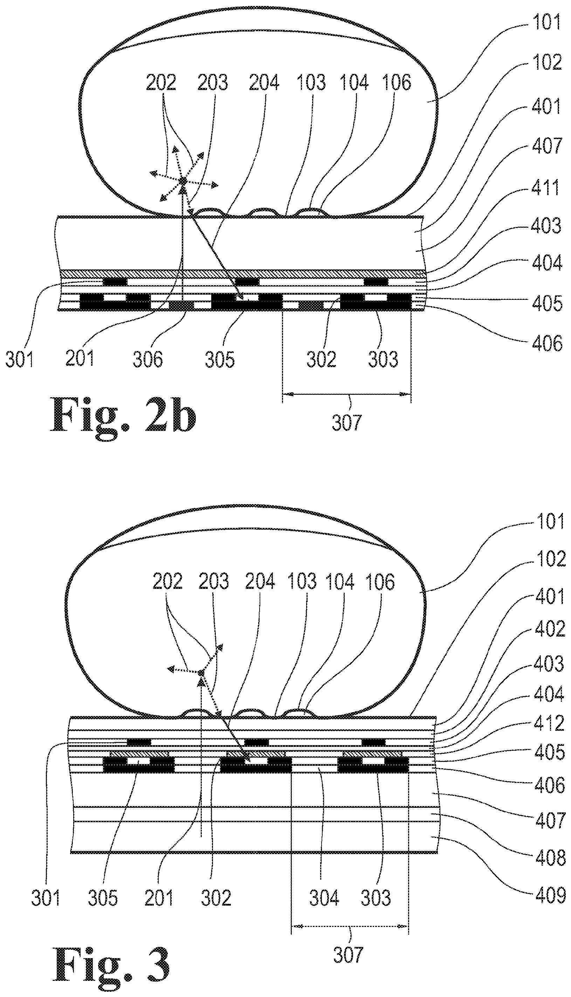

Zur Unterdrückung der Erfassung von störendem Umgebungslicht, können eine oder mehrere Spektralfilterschichten 411 (in Fig. 1 nicht gezeigt) in die Schichtenfolge des Direktsensors integriert sein. Dadurch kann der von einigen Anwendern geforderte Umgebungslichtschutz realisiert werden, bei dem die Direktsensoren auch im direkten Sonnenlicht funktionieren müssen. Zur Verhinderung der Sättigung der lichtempfindlichen Elemente 303 durch das Umgebungslicht können zwischen den lichtempfindlichen Elementen 303 und der Auflagefläche 102 eine oder mehrere vollflächige Spektralfilterschichten 411 eingelagert sein (nur in Fig. 2b gezeichnet). Ein solches Spektralfiltersystem kann auf der kompletten Fläche des Direktsensors als durchgehendes Schichtsystem aufgebracht sein. Die Spektralfilterschicht 411 ist so ausgestaltet, dass bevorzugt Umgebungslicht absorbiert oder reflektiert und mindestens ein Anteil des Beleuchtungslichts 201 transmittiert wird.

Bevorzugt ist eine strukturierte Spektralfilterschicht 412 (nur in Fig. 3 gezeichnet) mit transparenten und absorbierenden Bereichen vorgesehen, wobei sich die absorbierenden Bereiche mindestens über den aktiven Bereichen 305 der lichtempfindlichen Elemente 303 befinden. Bevorzugt sind die absorbierenden Bereiche so angeordnet, dass keine Anteile des Beleuchtungslichts 201 durch die strukturierte Spektralfilterschicht 412 absorbiert werden.

Die Spektralfilterschicht 411 bzw. 412 liegt zwischen Sensorschicht 406 und Deckschicht 401, besonders bevorzugt zwischen Sensorschicht 406 und Kontrastblendenschicht 403. Die Deckschicht 401 selbst kann auch als Spektralfilterschicht 411 (nicht gezeichnet) ausgebildet sein (z. B. gefärbtes Glas). Eine weitere Ausführungsform ist es, die lichtempfindlichen Elemente 303 wellenlängenselektiv nur für die Wellenlänge des Beleuchtungslichts 201 auszubilden. Alle Maßnahmen lassen sich auch miteinander kombinieren.

Möglichkeiten zur Realisierung von Spektralfiltern sind zum Beispiel absorbierende organische und anorganische Farbstoffe und Partikel, resonante Metall-Nanopartikel- (plasmonische Filter) und Interferenzfilter. Falls zur Verbindung der Deckschicht 401 mit der Kontrastblendenschicht 403 ein flüssiger Klebstoff Verwendung findet, so lässt sich der Umgebungslichtschutz auch in diesen integrieren, die Spektralfilterschicht 411 wäre dann in der Adhäsionsmittelschicht 402 realisiert (nicht gezeichnet). Die Spektralfilterschicht 411 bzw. 412 ist vorzugsweise nur für solche Wellenlängen bzw. Wellenlängenbereiche durchlässig, die das aufliegende Objekt, Finger 101 oder Dokument 105, nicht durchdringen können. Je schmaler das Transmissionsband der Spektralfilterschicht 411 bzw. 412 ist, desto besser wird das Umgebungslicht (z. B. Sonnenlicht) geblockt. Selbstverständlich ist es auch möglich, mehrere Spektralfilter zu kombinieren oder die Spektralfilterschicht 411 bzw. 412 so zu gestalten, dass sie für mehrere Wellenlängenbereiche selektiv ist.

Wird ein auf die Auflagefläche 102 aufgelegtes Objekt, Finger 101 bzw. Dokument 105, aus Richtung der Durchlassbereiche 304 der Sensorschicht 406 vom Beleuchtungslicht 201 beleuchtet, so durchläuft das Beleuchtungslicht 201 dafür mindestens den Durchlassbereich 304 der Sensorschicht 406, die Diodenblendenschicht 405, die Abstandsschicht 404 und die Kontrastblendenschicht 403 sowie die Deckschicht 401. Alle Schichten des Direktsensors sind für mindestens Anteile des Beleuchtungslichts 201 transparent.

Ist ein Objekt, beispielsweise ein Finger 101, wie in Fig. 1 gezeigt, mit der Auflagefläche 102 in Kontakt und bereit zur Aufnahme, dringt Beleuchtungslicht 201 über die transparenten Bereiche der Vorrichtung durch die Auflagefläche 102 zum Finger 101 vor. Beim Auftreffen auf den auf der Auflagefläche 102 aufliegenden Finger 101 wird Beleuchtungslicht 201 in den Finger 101 eingekoppelt und dort gestreut. Die Richtung des Streulichts 202 ist aufgrund Mehrfachstreuung stochastisch.

Ein Anteil des Streulichts 202 verläuft als Streulicht 203 in Richtung der Auflagefläche 102 und tritt dort als remittiertes Licht 204 über die Papillarleiste (Hautberg 103) an der Auflagefläche 102 in die Deckschicht 401 ein. Von dort durchdringt das remittierte Licht 204 die weitere Schichtenfolge und wird schließlich im aktiven Bereich 305 der lichtempfindlichen Elemente 303 aufgenommen, wobei die erfasste Lichtstärke in ein elektrisches Signal umgewandelt und anschließend in ein Grauwertbild umgerechnet wird. Ähnliches geschieht in den Hauttälern 104, aus denen Streulicht 203 vorerst in die Luftspalte 106 der Hauttäler 104 auskoppelt und im Anschluss über die Auflagefläche 102 als remittiertes Licht 204 in die Deckschicht 401 eintritt. Aufgrund des zusätzlichen optischen Übergangs bei remittiertem Licht 204 aus den Hauttälern 104 kommt es zu einem größeren Lichtverlust als bei den ohne Luftspalt 106 aufliegenden Hautbergen 103, der von den lichtempfindlichen Elementen 303 detektiert und als Kontrast zwischen Hautbergen 103 und Hauttälern 104 dargestellt wird.

Das Winkelspektrum der Einstrahlrichtung des remittierten Lichts 204 ist aufgrund der Mehrfachstreuung im Finger 101 stochastisch. Es ergeben sich mehrere mögliche Richtungen, wobei die Summe aller möglichen Lichtwege des in die Deckschicht 401 (an der Auflagefläche 102 gebrochenen) remittierten Lichts 204 einen Lichtkegel beschreibt. In der Deckschicht 401 werden zwei Grenzwinkel 205 und 206 (nur in Fig. 4a und 4b bezeichnet) des remittierten Lichts 204 durch den Brechzahlübergang zwischen Hautberg 103 und Deckschicht 401 bzw. Luftspalt 106 und Deckschicht 401 definiert. Der Anteil des remittierten Lichts 204, der von den aktiven Bereichen 305 erfasst wird, ist abhängig von der Positionierung und Ausgestaltung der Kontrastblendenschicht 403, die den Lichtweg des remittierten Lichts 204 einschränkt.

In Fig. 2a und 2b wird das Beleuchtungslicht 201 durch Punktlichtquellen 306, wie LEDs, OLEDs, QLEDs oder LCDs emittiert und beleuchtet den aufgelegten Finger 101 diffus, das heißt, dass Beleuchtungslicht 201 in alle Winkel abgestrahlt wird. Einzelne Punktlichtquellen 306 sind hierbei nicht direkt einem lichtempfindlichen Element 303 zugeordnet, das heißt, dass ein lichtempfindliches Element 303 remittiertes Licht 204 aus der Summe mehrerer Punktlichtquellen 306 detektiert.

In Fig. 2a ist eine bevorzugte Ausführungsform der Vorrichtung in der Seitenansicht schematisch dargestellt. Dabei ist eine Beleuchtungsschicht zum Aussenden von Beleuchtungslicht 201 in die Sensorschicht 406 integriert. Die Punktlichtquellen 306 sind innerhalb der Sensorschicht 406 versetzt zu den lichtempfindlichen Elementen 303 in den Durchlassbereichen 304 der Pixel 307 angeordnet und emittieren diffuses Beleuchtungslicht 201 in den oberen Halbraum in Richtung Auflagefläche 102. Zur Vermeidung interner Totalreflexion an der Auflagefläche 102 der Deckschicht 401, können Mittel zur Kollimation des Beleuchtungslichts 201 der Punktlichtquellen 306 oder weitere bündelbegrenzende Blenden (nicht gezeichnet) eingesetzt werden. Dies kann zum Beispiel durch eine geeignete Gestaltung der Diodenblenden 302 und/oder der Kontrastblenden 301 in der Diodenblendenschicht 405 bzw. Kontrastblendenschicht 403 realisiert werden.

Des Weiteren gibt es, wie schon weiter oben beschrieben, keine direkte Zuordnung von Punktlichtquelle 306 und lichtempfindlichem Element 303, da sich die Lichtkegel der Punktlichtquellen 306 in der Auflagefläche 102 überlagern können und es zur Mehrfachstreuung im Finger 101 kommt, bevor das in die Deckschicht 401 eintretende remittierte Licht 204 detektiert wird.

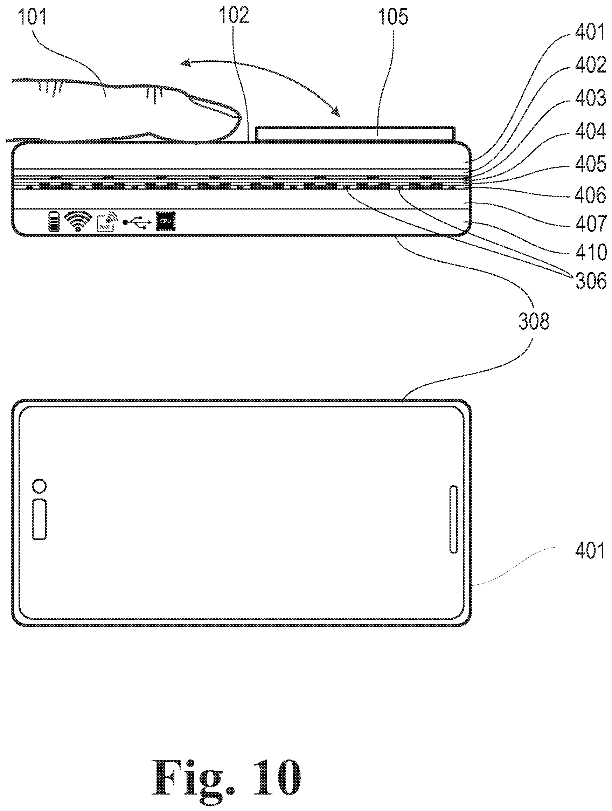

Ein Vorteil der Ausführungsform von Fig. 2a ist, dass das Substrat nicht zwingend transparent sein muss, da die Punktlichtquellen 306 zum Aussenden des Beleuchtungslichts 201 über dem Substrat 407 angeordnet sind. Ebenfalls wird durch die Integration der Beleuchtung in die Sensorschicht 406 eine dünnere Vorrichtung realisiert, was besonders für mobile Anwendungen von Vorteil ist. Die vollständige Integration einer solchen Vorrichtung in ein mobiles Gerät (z. B. Handy, Tablet, etc.), bei dem der optische Direktsensor in die gesamte Fläche des Displays integriert ist und auf der gesamten Anzeigefläche des mobilen Gerätes ein Objekt (z.B. Finger 101 oder Dokument 105) mit hoher Bildqualität aufgenommen werden kann. Eine solche Ausführungsform der Erfindung ist in Fig. 10 dargestellt.

In einer weiteren Ausführungsform der Vorrichtung zur optischen Direktaufnahme von sicherheitsrelevanten Objekten, ist - wie in Fig. 2b dargestellt - die Deckschicht 401 mit der Auflagefläche 102 zugleich als transparentes Substrat 407 für die Schichtenfolge ausgebildet. Auf das ursprünglich unter der Sensorschicht 406 befindliche Substrat 407, wie in Fig. 1 und Fig. 2a gezeigt, kann dadurch verzichtet werden. Die Deckschicht 401 liegt hierzu als Substrat 407 vor und es wird als erstes die Kontrastblendenschicht 403 und gegebenenfalls noch davor oder danach eine Spektralfilterschicht 411 aufgebracht. Anschließend werden nacheinander Abstandsschicht 404, Diodenblendenschicht 405 und Sensorschicht 406 aufgebracht. Dies hat den Vorteil, dass die Gesamtdicke und die Herstellungskosten der Vorrichtung geringer sind, weil auf ein separates Substrat 407 bzw. eine separate Deckschicht 401 sowie auf eine Adhäsionsmittelschicht 402 und den zugehörigen Fügeprozess verzichtet wird. Anwendungsszenarien finden sich für diese Ausführungsform in mobilen Geräten, bei denen eine geringe Dicke vorteilhaft ist und die Rückseite der Sensorschicht 406 durch den Geräterahmen oder eine einfache und günstige Alternative, zum Beispiel eine Kunststofffolie, gekapselt ist.

In Fig. 3 ist eine bevorzugte Ausführungsform der Vorrichtung in der Seitenansicht schematisch dargestellt, bei der die Beleuchtungsschicht 409 ein unter dem Substrat 407 angelegtes Display ist. Bevorzugt befindet sich zwischen Beleuchtungsschicht 409 und Substrat 407 eine Luftschicht 408, um das Winkelspektrum des Beleuchtungslichts 201 durch den optischen Übergang von Luft zum Substrat 407 einzuschränken. Statt Luft kann das Display prinzipiell auch über eine weitere Adhäsionsmittelschicht (nicht gezeichnet) an das Substrat 407 optisch gekoppelt sein, jedoch ist der Vorteil der Winkeleinschränkung dann nicht mehr gegeben.

Vorzugsweise kommt in Fig. 3 eine Beleuchtungsschicht 409 in Form eines Displays mit einzeln ansteuerbaren Punktlichtquellen 306 (nicht eingezeichnet) zum Einsatz, wodurch ein auf die Auflagefläche 102 aufgelegtes Objekt, Finger 101 oder Dokument 105, strukturiert beleuchtet werden kann. Besonders bevorzugt ist ein Display, das Beleuchtungslicht 201 mit unterschiedlichen Wellenlängen im sichtbaren Spektralbereich emittiert, womit dem Nutzer hilfreiche farblich hervorgehobene Informationen angezeigt werden können. Eine Nutzerführung zur verständlicheren Nutzung des Direktsensors ist somit integrierbar. Die Auflösung der Punktlichtquellen 306 der Hintergrundbeleuchtung bzw. des Displays kann zwischen 100 und 1000 ppi liegen, bevorzugt im Bereich von 300-500 ppi.

Durch die zusätzliche Luftschicht 408 wird das diffuse Beleuchtungslicht 201 beim Eintritt in das Substrat 407 an der Grenzfläche Luftschicht 408 zum Substrat 407 gebrochen. Wie schon weiter oben beschrieben, führt dies zu einer Einschränkung des Winkelspektrums des Beleuchtungslichts 201. Dies hat den Vorteil, dass das Beleuchtungslicht 201 an der Oberfläche der Deckschicht 401 nicht totalreflektiert wird, was andernfalls zu einer Kontrastverminderung führen würde.

In Fig. 4a sind zur Erläuterung des Erfindungsprinzips der Kontrasterhöhung die Grenzwinkel 205 und 206 für einen streifenden Lichteinfall an der Auflagefläche 102, die eine Grenzfläche für zwei unterschiedliche Medien- bzw. Brechzahlübergänge von Hautberg 103 (direkter Hautkontakt) und Hauttal 104 (Luftspalt 106) schematisch in der Schnittdarstellung gezeigt. Wie schon weiter oben beschrieben, ergeben sich aufgrund der Streuung im auf der Auflagefläche 102 aufliegenden Objekt mehrere mögliche Lichtwege des remittierten Lichts 204, wobei die Summe aller Lichtwege einen Lichtkegel mit einem definierten Grenzwinkel 205 oder 206 beschreibt. Die Grenzwinkel 205 oder 206 beschreiben den jeweiligen Winkel des remittierten Lichts 204 nach der Lichtbrechung an der Grenzfläche der zwei oben genannten Materialien für einen streifenden Lichteinfall und sind abhängig von den optischen Eigenschaften der beiden Materialien (Haut, Luft), aus denen das Licht kommt, und des Materials (z. B. Glas), in das die unterschiedlichen Lichtanteile remittiert werden.

Schematisch sind der Grenzwinkel 205 für die Übergänge von Luft zu Deckschicht 401 und der Grenzwinkel 206 für Übergänge von Haut zu Deckschicht 401 dargestellt. Die Deckschicht 401 ist in beiden Fällen das optisch dichtere Medium, weshalb das Licht zum Lot 208 der Auflagefläche 102 hin gebrochen wird. Das Winkelspektrum des remittierten Lichts 204 wird eingeschränkt. Für weitere Berechnungen wird beispielhaft eine Deckschicht 401 aus Glas mit einer Brechzahl von n = 1,517 (= Brechzahl von BK7-Glas) und die Haut mit n = 1,376 angenommen (= Brechzahl von Hornhaut). Zwischen den Hautbergen 103 befindet sich Luft mit n = 1 in den Hauttälern 104. Die Brechzahl gilt für eine Wellenlänge von 600 nm. Durch die Lichtbrechung an der Auflagefläche 102 beschreibt das remittierte Licht 204 einen Lichtkegel mit einem definierten Winkelbereich zwischen dem Lot 208 der Auflagefläche 102 und dem Grenzwinkel 205 oder 206. Eine erste Art Lichtkegel remittierten Lichts 204 für den Übergang von Haut zu Glas hat einen Grenzwinkel 206 von ca. 65° und eine zweite Art Lichtkegel für den Übergang Luft zu Glas hat einen Grenzwinkel 205 von ca. 41°. Werden beide Arten Lichtkegel jeweils vollständig von den lichtempfindlichen Elementen 303 detektiert (ohne zusätzliche Blenden), führt dies zu einem geringen Kontrast zwischen den Hautbergen 103 und den Hauttälern 104, da sich die erste und die zweite Art Lichtkegel in ihrem Energieinhalt nur geringfügig unterscheiden. Zur beabsichtigten stärkeren Unterscheidung der Detektion der beiden Arten von Lichtkegeln remittierten Lichts 204, um den Kontrast zwischen Hautbergen 103 und Hauttälern 104 zu vergrößern, wird erfindungsgemäß von den Kontrastblenden 301 der Anteil der Winkelbereiche, den beide Arten von Lichtkegeln einschließen, teilweise oder komplett geblockt. Hierdurch wird der relative Anteil der Winkelbereiche, der nur beim Übergang Hautberg 103 zur Deckschicht 401 auftritt, bei der Detektion vergrößert.

Fig. 4b zeigt den Differenzwinkelbereich 207 in einer schematischen Schnittdarstellung. Der Differenzwinkelbereich 207 beschreibt einen Winkelbereich des remittierten Lichts 204, der ausschließlich von den auf der Auflagefläche 102 aufliegenden Hautbergen 103 in die Deckschicht 401 remittiert wird. Das heißt, dass in dem Differenzwinkelbereich 207 z. B. kein Licht remittiert wird, das vom Luftspalt 106 im Hauttal 104 in die Deckschicht 401 einkoppelt.

Zweck der erfindungsgemäßen Kontrastblendenschicht 403 ist es, den Winkelbereich der lichtempfindlichen Elemente 303, in dem diese das remittierte Licht 204 detektieren können, derart einzuschränken, dass die Art Lichtkegel mit dem kleineren Grenzwinkel 205 (ca. 41° bei BK7 als Deckschicht 401), der beim Übergang zwischen Luftspalt 106 im Hauttal 104 und Deckschicht 401 entsteht, von den lichtempfindlichen Elementen 303 nur zu kleinen Teilen oder gar nicht detektiert werden kann. Das aus den Hauttälern 104 remittierte Licht 204 wird nahezu vollständig geblockt, wohingegen nur ein Anteil des remittierten Lichts 204 aus den Hautbergen 103 geblockt wird. Dies betrifft die Winkel zwischen 0° und dem Grenzwinkel 205 für den Luft-Glas-Übergang (41°). Die Kontrastblende 301 ist bevorzugt so angeordnet, dass von den lichtempfindlichen Elementen 303 vorwiegend remittiertes Licht 204 mit Einfallswinkeln über ca. 41° zum Lot 208 der Auflagefläche 102 detektiert wird. Wie aus Fig. 4a und 4b ableitbar, wird dadurch ausschließlich remittiertes Licht 204 detektiert, das aus den Hautbergen 103 in die Schichtenfolge remittiert wurde. Hierdurch wird der Kontrast zwischen Hautbergen 103 und Hauttälern 104 erheblich erhöht, da das störende remittierte Licht 204 aus den Hauttälern 104 geblockt und nicht detektiert wird.

Die Ausgestaltung hinsichtlich Form und Position der Kontrastblenden 301 ist dabei in weiten Grenzen frei wählbar und stellt bei der Herstellung des optischen Direktsensors lediglich einen weiteren Beschichtungs- und Strukturierungsprozessschritt oder Druckprozess dar. Zur Herstellung der Schichtenfolge kann solch ein Prozessschritt problemlos integriert werden, wodurch sich der Kontrast der aufgenommenen Hautabdrücke verbessert.

Die kontrastreiche Aufnahme von feuchten Fingern 101, sogenanntes "Water Rejection", ist nach wie vor ein Problem bei optischen Direktsensoren. Dies liegt darin begründet, dass Haut und Wasser eine ähnliche Brechzahl im sichtbaren Bereich des Lichtes haben, nämlich 1,376 für Haut und 1,33 für Wasser, womit die Grenzwinkel 205 und 206 des remittierten Lichts 204 beider Fälle sehr nah beieinanderliegen. In einer weiteren Ausführungsform wird die kontrastreiche Aufnahme feuchter Finger 101 dadurch realisiert, dass in die Schichtenfolge remittiertes Licht 204 vom Übergang Wasser (n = 1,33) zu Deckschicht 401 (z. B. BK7-Glas mit n = 1,517) von einer entsprechend ausgestalteten Kontrastblende 301 komplett geblockt wird. Die Kontrastblende 301 schränkt in diesem Fall die Detektion von remittiertem Licht 204 bis zu einem entsprechenden Grenzwinkel des Übergangs Wasser zu Glas (nicht gezeichnet) komplett ein. Dieser beträgt ca. 61° (für BK7), während der Differenzwinkelbereich 207 noch detektiert werden kann. Das heißt, dass der von den aufliegenden Hautbergen 103 remittierte Lichtkegel den größeren Grenzwinkel 206 mit ca. 65° hat und noch remittiertes Licht 204 detektiert wird. Ein großer Teil des remittierten Lichts 204 aus den aufliegenden Hautbergen 103 wird jedoch ebenfalls geblockt und das Signal-Rausch-Verhältnis sinkt. Zur Kompensation kann beispielsweise die Lichtstärke des Beleuchtungslichts 201 erhöht werden.

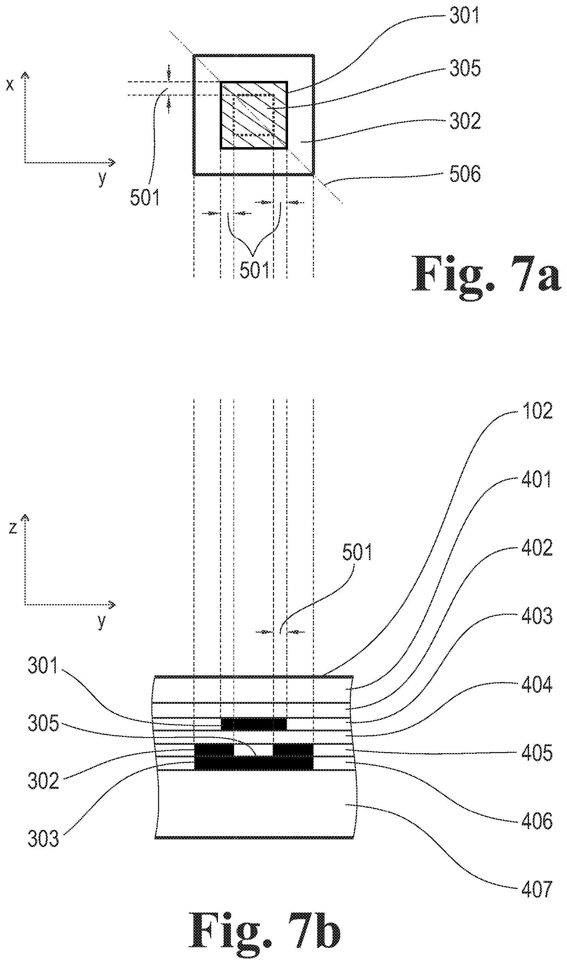

Für diesen oder ähnliche Spezialfälle sind in einer bevorzugten Ausführungsform zwei oder mehr verschieden ausgestaltete Kontrastblenden 301 in ein und denselben optischen Direktsensor integriert, um die kontrastoptimierte Aufnahme von zum Beispiel normalen Fingern 101, feuchten Fingern 101 und Dokumenten 105 mit der gleichen Vorrichtung zu ermöglichen. Die Ausgestaltungen der unterschiedlichen Kontrastblenden 301 sind für die kontrastoptimierte Aufnahme von Objekten bzw. in verschiedenen Anwendungsszenarien optimiert und abwechselnd in der Schichtenfolge angeordnet. Ebenfalls möglich ist die Ausgestaltung bestimmter lichtempfindlicher Elemente 303 mit zugeordneten Kontrastblenden 301 als Sonnenlichtsensor beispielsweise zur Detektion der Stärke des Umgebungslichts. Ein großer Überstand 501 (nicht gezeichnet, siehe dazu Fig. 7a,b) der Kontrastblende 301 zum aktiven Bereich 305 sorgt dafür, dass keine Übersättigung des lichtempfindlichen Elements 303 sogar bei sehr großer Umgebungslichtstärke auftritt, wodurch diese messbar wird.

Sind unterschiedliche Kontrastblenden 301 in einem optischen Direktsensor integriert (wie in Fig. 5 gezeichnet) und ist dadurch die Schichtenfolge für verschiedene Aufnahmeszenarien optimiert, verringert sich folglich die Auflösung für jedes einzelne Aufnahmeszenario, da weniger ppi pro Aufnahmeszenario zur Verfügung stehen. Dies kann kompensiert werden, indem optische Direktsensoren mit höherer Auflösung (ppi) eingesetzt werden.

In einem Verfahren, das zwei unterschiedliche Kontrastblenden 301 auf dem gleichen optischen Direktsensor nutzt, wird ein erstes Bild mit einer ersten Kontrastblenden-Anordnung, die für die kontrastreiche Aufnahme normaler Hautbereiche ausgestaltet ist (blockt remittiertes Licht 204 in einem Lichtkegel bis zum Winkel von 41° zum Lot 208 der Auflagefläche 102), und einer ersten Lichtstärke des Beleuchtungslichts 201 aufgenommen. Ein Bildbewertungsalgorithmus evaluiert dabei den Kontrast zwischen Hautbergen 103 und Hauttälern 104. Liegt der Kontrastwert unter einer Mindestschwelle, wird ein zweites Bild mit einer zweiten Kontrastblenden-Anordnung, die für die kontrastreiche Aufnahme feuchter Hautbereiche ausgestaltet ist (blockt remittiertes Licht 204 in einem Lichtkegel bis zum Winkel von 61° zum Lot 208 der Auflagefläche 102), und einer zweiten Lichtstärke des Beleuchtungslichts 201 aufgenommen. Das zweite Bild wird gespeichert und zur Weiterverarbeitung, z. B. zum Abgleich mit einem gespeicherten Fingerabdruck, an die Elektronik eines Geräts mit dem optischen Direktsensor übermittelt. Die zweite Lichtstärke des Beleuchtungslichts 201 ist dabei größer als die erste Lichtstärke des Beleuchtungslichts 201, um ein gutes Signal-Rausch-Verhältnis zu gewährleisten, da in der zweiten Kontrastblenden-Anordnung mehr Lichtwege des remittierten Lichts 204 eingeschränkt werden.

Die Aufnahme von Dokumenten 105 (Pässen, Visitenkarten, Führerscheinen, etc.), wie sie in Fig. 5 und 6 gezeigt ist, stellt besondere Herausforderungen an die Kontrastblendenschicht 403, da sich stets ein dünner Luftspalt 106 zwischen dem Dokument 105 und der Auflagefläche 102 befindet, weil die Oberfläche eines Dokuments 105 nicht optisch mit der Auflagefläche 102 gekoppelt wird.

In Fig. 5 ist schematisch die Seitenansicht der Vorrichtung gemäß Fig. 2a dargestellt, mit dem Unterschied, dass ein Dokument 105 statt eines Fingers 101 auf der Auflagefläche 102 liegt und aufgenommen wird.

Die Erzeugung des Beleuchtungslichts 201 erfolgt in diesem Beispiel wie in Fig. 2a ebenfalls aus Punktlichtquellen 306, die innerhalb des Pixelrasters der Sensorschicht 406 in den transparenten Durchlassbereichen 304 angeordnet sind. Die Punktlichtquellen 306 sind zur Vermeidung von interner Totalreflexion an der Auflagefläche 102 der Deckschicht 401 mit bündelbegrenzenden oder kollimierenden Einrichtungen (nicht gezeichnet) ausgestattet. Bei der Beleuchtung des Dokuments 105 mit Beleuchtungslicht 201 kommt es zur Streuung an der Oberfläche des Dokuments 105. Das in Richtung Deckschicht 401 rückgestreute Licht durchläuft den Luftspalt 106 zwischen Dokument 105 und Deckschicht 401 und tritt über die Auflagefläche 102 als remittiertes Licht 204 in die Schichtenfolge des Direktsensors ein. Durch den Luftspalt 106 beträgt der Grenzwinkel 205 des remittierten Lichtkegels ca. 41° (bei Verwendung von BK7 als Deckschicht 401). Wären die Kontrastblenden 301 ausschließlich für die kontrastoptimierte Aufnahme von Fingerabdrücken ausgestaltet, können keine Dokumente 105 mehr aufgenommen werden, da remittiertes Licht 204 mit Winkeln < 41° zum Lot 208 der Auflagefläche 102 durch die Kontrastblende 301 vollständig geblockt wird.

Wie weiter oben schon beschrieben und in Fig. 5 dargestellt, kann der optische Direktsensor verschiedene nebeneinander angeordnete Kontrastblenden 301 für bestimmte Aufnahmeszenarien aufweisen. In diesem Fall sind die Kontrastblenden 301 abwechselnd nebeneinander für die kontrastreiche Aufnahme von sowohl Hautabdrücken (z. B. Finger 101) als auch Dokumenten 105 ausgestaltet.

Ferner kann zur Ansteuerung der Sensorelektronik (nur in Fig. 10 gezeigt) zwischen den Aufnahmemodi unter Benutzung von unterschiedlich ausgeführten Kontrastblenden 301 hin und her geschaltet werden, um jeweils nur eine Hälfte der lichtempfindlichen Elemente 303 auszulesen, abhängig davon, ob ein Dokument 105 oder ein Finger 101 aufgenommen wird.

In einer weiteren Ausführungsform wird durch eine zusätzliche Infrarotdiode und einen Infrarotsensor vor der Aufnahme geprüft, ob sich ein Finger 101 oder ein Dokument 105 der Aufnahmefläche 102 nähert und der jeweilige Aufnahmemodus wird durch Ansteuerung der entsprechenden lichtempfindlichen Elemente 303 ausgewählt.

Ebenfalls kann auch jeweils ein Bild mit den unterschiedlichen Ausgestaltungen der Kontrastblenden 301 aufgenommen werden. Die Kombination beider Aufnahmen ist für eine Lebenderkennungsmethode hilfreich, da Fälschungen anders mit der Oberfläche in Kontakt treten, als beispielsweise ein lebender Finger 101. So zeigt sich zum Beispiel beim Auflegen von auf Papier oder Folien ausgedruckten Fingerabdrücken keine optische Kopplung mit der Auflagefläche 102 (ähnlich wie bei der Aufnahme eines Dokuments 105). Die für den Fingerabdruck optimierte Kontrastblende 301 wird hier also dazu führen, dass kein kontraststeigerndes remittiertes Licht 204 aufgenommen werden kann. Damit ist das Umgehen der Lebenderkennung (sog. Antispoofing) mit einer Fälschung durch einen auf Papier oder Folie ausgedruckten Fingerabdruck deutlich erschwert gegenüber den im Stand der Technik beschriebenen Lösungen, bei denen hauptsächlich die Hauttäler 104 detektiert werden.

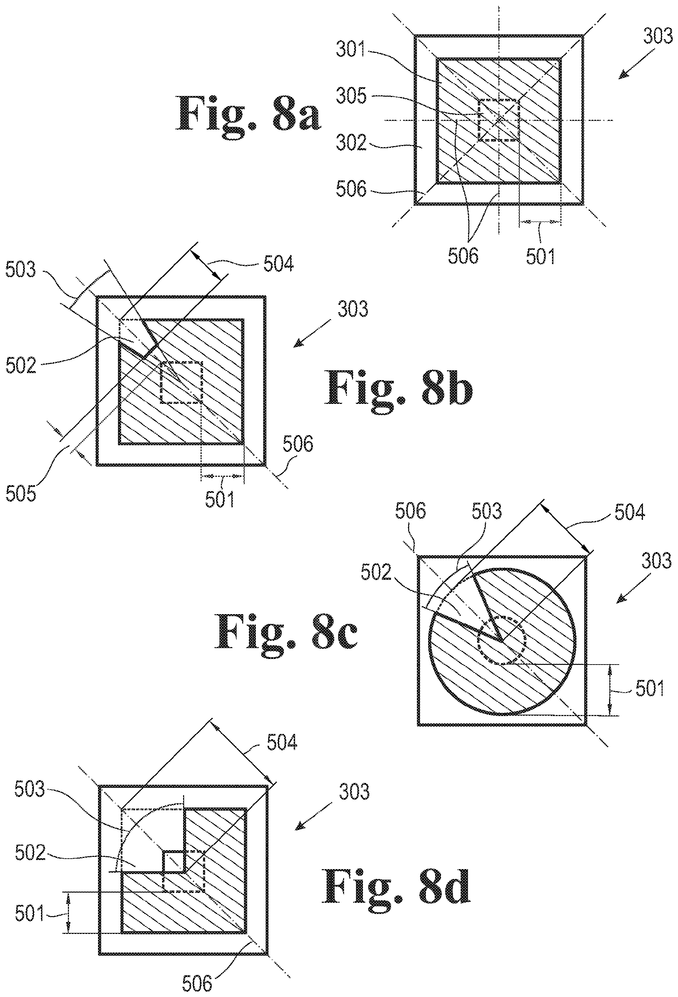

Eine bevorzugte Ausführungsform der Kontrastblende 301 für die kontrastreiche Aufnahme von verschiedenen Objekten, Fingern 101 und Dokumenten 105, ist es, einen definierten Durchlass für einen kleinen Anteil des remittierten Lichts 204 vom Übergang Luft zu Deckschicht 401 zu schaffen, damit dieser Anteil von den lichtempfindlichen Elementen 303 erfasst wird. Dies kann, wie in Fig. 5 zu sehen, durch eine Kontrastblende 301 realisiert werden, die keinen oder nur einen minimalen Überstand 505 (hier nicht gezeichnet, siehe z. B. Fig. 8b) zum aktiven Bereich 305 des lichtempfindlichen Elements 303 aufweist.

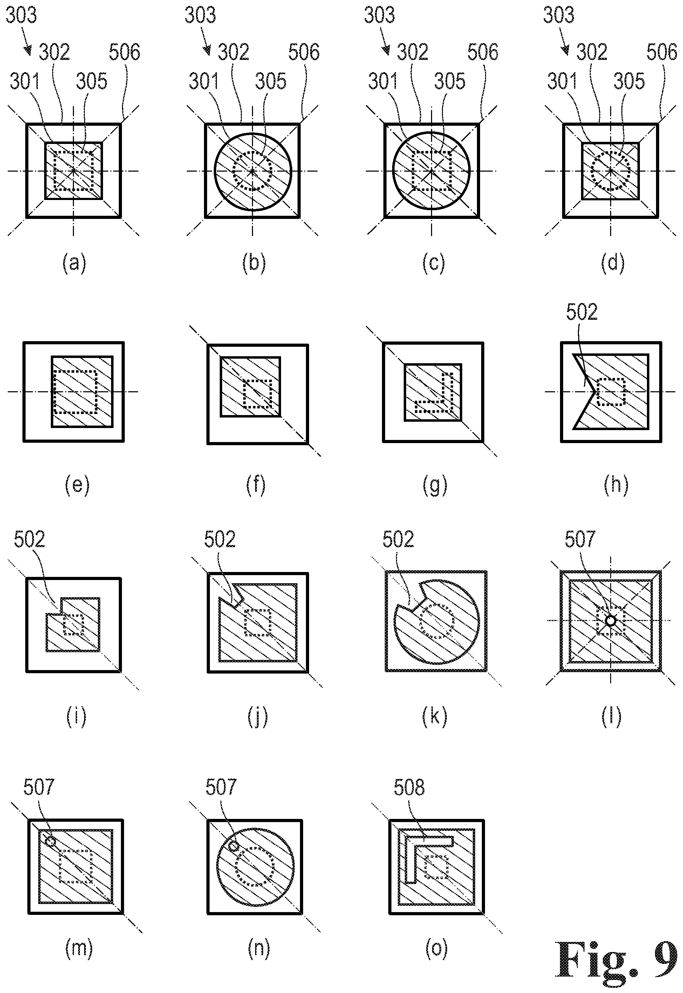

In einer besonders bevorzugten Ausführungsform wird der Überstand 501 der Kontrastblende 301 für die kontrastreiche Aufnahme von Hautbereichen optimiert und gleichzeitig ein Loch 507 [hier nicht gezeichnet, siehe aber Fig. 9, Teilansicht (I)] über dem aktiven Bereich 305 des lichtempfindlichen Elements 303 in die Kontrastblende 301 eingebracht, was zusätzlich die Aufnahme von Dokumenten 105 ermöglicht. Ein Vorteil dieser Ausführungsform ist, dass die Auflösung der Dokumentenaufnahme hoch ist, da nur remittiertes Licht 204 detektiert wird, das senkrecht auf das lichtempfindliche Element 303 auftrifft. Hierdurch wird vermieden, dass Informationen von einem Objektpunkt in mehreren lichtempfindlichen Elementen 303 detektiert werden. Die kleinflächige Öffnung in der Kontrastblende 301, die in Fig. 9 (I) nur als Loch 507 gezeichnet ist, kann stattdessen auch als Quadrat oder andere gleichseitige Vielecke oder als Schlitze, vorzugsweise in gekreuzter Stellung zueinander, vorliegen.

Wie weiter oben schon beschrieben, definiert die Diodenblendenschicht 405 die Größe und Form des aktiven Bereichs 305 des lichtempfindlichen Elements 303, indem die Diodenblende 302 periphere Teile des lichtempfindlichen Elements 303 abdeckt.

Eine weitere Gestaltung des Direktsensors mit Anpassungen für die Aufnahme von Dokumenten 105 ist in Fig. 6 als schematisch verkürzter Ausschnitt dargestellt. Gezeigt sind zwei lichtempfindliche Elemente 303, die im Unterschied zu Fig. 5 keine Diodenblendenschicht 405 aufweisen und deshalb von einer vollständig überdeckenden Kontrastblende 301 abgeschattet werden. Die Beleuchtung des Dokuments 105 wird in diesem Fall durch eine Beleuchtungsschicht 409 bereitgestellt, die diffuses Beleuchtungslicht 201 aussendet, das durch die zum Substrat 407 vorhandene Luftschicht 408 in Richtung der Auflagefläche 102 der Deckschicht 401 insoweit eine Kollimation und Ausrichtung erfährt, dass zumindest eine interne Totalreflexion an der Auflagefläche 102 vermieden wird. Das Beleuchtungslicht 201 beleuchtet das Dokument 105 in gleicher Weise, wie zu Fig. 5 beschrieben, und es kommt zur Streuung an der Oberfläche des Dokuments 105. Das Streulicht 203 durchläuft den Luftspalt 106 zwischen Dokument 105 und Deckschicht 401, tritt über die Auflagefläche 102 in die Deckschicht 401 ein und wird aufgrund des Luftspalts 106 als remittiertes Licht 204 mit einem Grenzwinkel 205 von ca. 41° in der Schichtenfolge größtenteils von der Kontrastblende 301 geblockt. Infolge eines minimalen Überstands 505 der Kontrastblende 301 gegenüber dem unbeschränkten lichtempfindlichen Element 303 (d. h. mit großflächigem aktivem Bereich 305 des lichtempfindlichen Elements 303) werden nur Streulichtanteile geblockt, die nahezu parallel zum Lot 208 der Auflagefläche 102 einfallen, und alles schräg einfallende remittierte Licht 204 kann zur Aufnahme des Dokuments 105 durch die Sensorschicht 406 pixelweise aufgenommen werden.

In diesem Beispiel ist der aktive Bereich 305 genau so groß wie das lichtempfindliche Element 303. In einer bevorzugten Ausführungsform, siehe Fig. 6, schattet die Kontrastblende 301 das lichtempfindliche Element 303 so ab, dass kein Licht mehr detektiert wird, das orthogonal zur Auflagefläche 102 in die Schichtenfolge remittiert wird, womit sowohl Dokumente 105 als auch Hautabdrücke aufgenommen werden können.

Eine flächenmäßig kleinere Kontrastblende 301 würde aus den weiter oben schon beschriebenen Gründen zu einer Verschlechterung des Kontrasts zwischen Hautbergen 103 und Hauttälern 104 führen. Eine flächenmäßig größere Kontrastblende 301 mit einem definierten Überstand 501 zum aktiven Bereich 305 empfiehlt sich in diesem Fall ebenfalls nicht, da hierdurch die Durchlassbereiche 304 der Sensorschicht 406 durch die nicht transparente Kontrastblende 301 überlappt werden und der Lichtweg des Beleuchtungslichts 201 auf dem Weg zur Auflagefläche 102 anteilig geblockt wird.

In Fig. 7a ist eine Ausführungsform von Diodenblende 302, aktivem Bereich 305 und Kontrastblende 301 zur kontrastverbesserten Aufnahme von Hautabdrücken in der Draufsicht schematisch dargestellt. In Fig. 7a ist in der zugehörigen Draufsicht der aktive Bereich 305 mit einer Strichlinie dargestellt. Die Kontrastblende 301 und die Diodenblende 302 sind mit Volllinien dargestellt, wobei die Kontrastblende 301 zusätzlich eine Schraffur aufweist. Soweit die Anordnung der Kontrastblende 301 und Diodenblende 302 und des aktiven Bereichs 305 Symmetrien aufweisen, sind entsprechende Symmetrieachsen 506 eingezeichnet. Exemplarisch ist in Fig. 7a eine mögliche Symmetrieachse 506 der dargestellten Anordnung als Strichpunktlinie dargestellt. Die Anordnung lässt sich in der Draufsicht über die x-y-Ebene eindeutig beschreiben. Die Schichtenfolge von Fig. 7a wird durch die y-z-Ebene beschrieben und ist unter Zugrundelegung der Erläuterungen zu Fig. 1 in Fig. 7b in einem Schnitt durch die y-z-Ebene als Seitenansicht dargestellt. Fig. 7b zeigt dazu zusätzliche Adhäsionsmittelschicht 402, mit der die optische Ankopplung der Deckschicht 401 durch angepasste Brechzahlübergänge zu der darunterliegenden Schichtenfolge der Vorrichtung vorgenommen wird.

Im Folgenden werden weitere vorteilhafte und besonders bevorzugte Ausführungsformen der Kontrastblende 301 und des aktiven Bereichs 305 dargestellt und beschrieben. Dabei ist die Schichtenfolge übereinstimmend mit einer der in Fig. 1, Fig. 2a, 2b, Fig. 3, Fig. 5, Fig. 6 oder Fig. 7a beschriebenen Konfigurationen, weshalb in den folgenden Figuren auf die Darstellung von Seitenansichten verzichtet wird. Die Ausführungsformen in Fig. 8a bis Fig. 8d und in Fig. 9, Teilabbildungen (a) bis (o) sind in der Draufsicht dargestellt und definieren mithilfe der Strich- und Volllinien die eindeutige Zuordnung zwischen dem aktiven Bereich 305, begrenzt durch die Diodenblende 302, und der Kontrastblende 301. Die Ausführungsformen unterscheiden sich in ihrer Symmetrie, der Ausrichtung von Kontrastblende 301 und aktivem Bereich 305 zueinander, den geometrischen Flächenformen und den Flächengrößen, sowie zusätzlichen Strukturierungen.

In Fig. 8a-d sind vier Ausführungsformen der Kontrastblende 301 und des aktiven Bereichs 305 schematisch in der Draufsicht auf ein lichtempfindliches Element 303 des optischen Direktsensors dargestellt. In allen Ausführungsformen sind Diodenblende 302 und die Kontrastblende 301 mit Volllinien und der aktive Bereich 305 mit einer Strichlinie sowie die Symmetrieachsen 506 mit Strichpunktlinien dargestellt. Die Kontrastblende 301, die zusätzlich eine Schraffur aufweist, hat in allen Ausführungsformen mindestens die gleiche flächenmäßige Größe wie der aktive Bereich 305 und maximal die gleiche flächenmäßige Größe wie die Diodenblende 302 bzw. das lichtempfindliche Element 303.

Fig. 8a zeigt eine quadratische Kontrastblende 301 und einen quadratischen aktiven Bereich 305. Die Flächenformen sind geometrisch gleich. Die Flächen sind außerdem parallel mit gleicher Ausrichtung im Sinne einer Zentralprojektion angeordnet, das heißt, dass die Kontrastblende 301 symmetrisch über dem aktiven Bereich 305 liegt. Der Überstand 501 der Kontrastblende 301 ist größer als in Fig. 1 und in beiden Dimensionen des Pixelrasters (x- und y-Dimension) gleich groß. Das bedeutet, dass die Kontrastblende 301 an jeder der vier Seiten des quadratischen aktiven Bereichs 305 einen gleich großen Überstand 501 aufweist. Die Ausführungsform in Fig. 8a hat zudem vier Symmetrieachsen 506, an denen die Anordnung gespiegelt werden kann.

In Fig. 8b haben Kontrastblende 301 und aktiver Bereich 305 ebenfalls eine geometrisch ähnliche Flächenform. Geometrisch ähnliche Flächenformen sind zum Beispiel Quadrat und Rechteck oder Kreis und Ellipse. In Fig. 8b hat die Kontrastblende 301 zudem einen ausgenommenen Sektor in Form einer Kerbe 502. Die Kerbe 502 ist durch den Kerbwinkel 503 und die Kerbtiefe 504 definiert, was einen verringerten minimalen Überstand 505 der Kontrastblende 301 zum aktiven Bereich 305 an der Position der Kerbe 502 zur Folge hat.

Fig. 8c zeigt eine runde Kontrastblende 301 mit einem ausgenommenen Sektor in Form einer Kerbe 502 und einen aktiven Bereich 305 mit kreisförmiger Fläche. In dieser Anordnung ist der Überstand 501 aufgrund der Kreisform bis auf die Stelle des ausgenommenen Sektors an allen Stellen gleich groß. Wie in Fig. 8b wird die Kerbe 502 durch den Kerbwinkel 503 und die Kerbtiefe 504 definiert, die bei der Herstellung einer solchen Ausführungsform frei wählbar ist. In diesem Fall bleibt kein minimaler Überstand 505 an der Position der Kerbe 502 bestehen, sondern es wird ein Teil des aktiven Bereichs 305 frei gelassen (nicht abgedeckt), wodurch in diesem Bereich auch remittiertes Licht 204 senkrecht einfallen kann, das zur Aufnahme von Dokumenten 105 als sicherheitsrelevante Objekte genutzt werden kann.

Sowohl in Fig. 8b als auch in Fig. 8c und 8d weist die Anordnung in Bezug auf die Kerbe 502 nur eine Symmetrieachse 506 auf.

In Fig. 8d ist eine weitere Ausführungsform der Erfindung gezeigt, die eine Abwandlung gegenüber Fig. 8b und Fig. 8c darstellt. Hier ist der ausgesparte Sektor bei einer quadratischen Kontrastblende 301 über einem quadratischen aktiven Bereich 305 dargestellt. Wie in Fig. 8c ist die Kerbe 502 bis über den aktiven Bereich 305 ausgenommen und beseitigt den ansonsten in allen Richtungen gleichmäßigen Überstand 501 in der Art, dass die Fläche der Kontrastblende 301 sowie die Fläche der Abdeckung des aktiven Bereichs 305 um ein Viertel reduziert ist. Diese Ausführung des aus Richtung der Auflagefläche 102 betrachteten lichtempfindlichen Elements 303 ist vornehmlich dafür geeignet, sowohl kontrastreiche Aufnahmen von Hautabdrücken (z. B. Fingern 101) als auch von Dokumenten 105 aufzunehmen, indem ca. 75 % des aktiven Bereichs 305 abgedeckt sind. Der Teil des remittierten Lichts 204, das orthogonal zur Auflagefläche 102 auf den aktiven Bereich 305 trifft, kann somit für die Aufnahme von Dokumenten 105 detektiert werden.

Fig. 9 zeigt in seinen Teilabbildungen (a) bis (o) bevorzugte Ausführungsformen für die Gestaltung der Kontrastblenden 301 und des aktiven Bereichs 305. Diese sind lediglich in der Draufsicht dargestellt, da die Schichtenfolge die gleiche ist wie in Fig. 1. In allen Ausführungsformen sind Kontrastblende 301 und Diodenblende 302 mit einer Volllinie, der aktive Bereich 305 mit einer Strichlinie und die Symmetrieachsen 506 mit einer Strichpunktlinie dargestellt. Die Kontrastblende 301, die zusätzlich eine Schraffur aufweist, hat in allen Ausführungsformen mindestens die gleiche flächenmäßige Größe wie der aktive Bereich 305 und maximal die gleiche flächenmäßige Größe wie die Diodenblende 302 bzw. das lichtempfindliche Element 303.

In Fig. 9 zeigt die Teilabbildung (a) die gleiche Ausführungsform der Kontrastblende 301, die bereits in Fig. 8a dargestellt und weiter oben beschrieben wurde. Je größer der Überstand 501 der Kontrastblende 301 gewählt wird, desto kleiner ist der Winkelbereich des remittierten Lichts 204, das in dem aktiven Bereich 305 detektiert wird. Dadurch wird ein bestimmter Teil des remittierten Lichts 204 nicht erfasst, wobei das aus Luft in die Schichtenfolge remittierte Licht 204 stärker geblockt wird als Licht, das von Haut in die Schichtenfolge remittiert wird. Damit wird der Kontrast zwischen Hautbergen 103 und Hauttälern 104 deutlich verbessert. Um die erfindungsgemäße Aufgabe zu lösen und den Kontrast zwischen Hautbergen 103 und Hauttälern 104 zu optimieren, wird der Überstand 501 der Kontrastblende 301 in einer besonders bevorzugten Ausführungsform so weit vergrößert, bis nur noch remittiertes Licht 204 mit Winkeln größer als dem Grenzwinkel 205 vom Luft-Glas-Übergang (ca. 41°) detektiert werden kann. Der dafür benötigte Überstand 501 ist maßgeblich abhängig von der Brechzahl der Deckschicht 401 und der Dicke der Abstandsschicht 404. Die Brechzahl der Deckschicht 401 definiert den Grenzwinkel 205 bzw. 206 des remittierten Lichts 204. Der benötigte Überstand 501 zum Blocken von remittiertem Licht von 0° bis zu einem bestimmten Grenzwinkel 205 zum Lot 208 der Auflagefläche 102 wird umso kleiner, je geringer die Dicke der Abstandsschicht 404 ist. Wird beispielsweise die Brechzahl n der Deckschicht 401 mit n = 1,517 (BK7-Glas) und die Dicke der Abstandsschicht 404 mit d = 10 μm angenommen, ist ein minimaler Überstand 505 von 8,7 μm notwendig, um remittiertes Licht 204 mit Winkeln < 41° zum Lot 208 der Auflagefläche 102 zu blocken und so Licht aus den Hauttälern 104 nicht zu detektieren.

Dies berechnet sich aus folgender Formel

$$a = d \cdot \tan \alpha,$$

wobei a der minimale Überstand 505 ist und $\alpha$ den Winkel des remittierten Lichts 204 zum Lot 208 der Auflagefläche 102 bezeichnet.

Für die Bestimmung des minimalen Überstands 505 zur kontrastreichen Aufnahme von feuchten Fingern 101 muss lediglich der Grenzwinkel von remittiertem Licht 204 vom Übergang Wasser zu Deckschicht 401 ($\alpha$ = 61°) in die oben beschriebene Formel eingetragen werden. Bei gleichen Voraussetzungen wie oben (d = 10 μm und n = 1,517) ergibt sich ein benötigter Überstand 501 von a = 18 μm, um die Lichtwege des aus Wasser in die Schichtenfolge remittierten Lichts 204 von 0° bis zum entsprechenden Grenzwinkel von 61° zum Lot 208 der Auflagefläche 102 einzuschränken und nicht zu detektieren.

Ein Vorteil optischer Direktsensoren besteht darin, sowohl Hautabdrücke (z. B. von Fingern 101) als auch Dokumente 105 aufnehmen zu können. Da ein aufgelegtes Dokument 105 keine optische Kopplung mit der Auflagefläche 102 eingeht und sich meist ein Luftspalt 106 zwischen dem Dokument 105 und der Auflagefläche 102 befindet, hat das remittierte Licht 204 eines Dokuments 105 einen Grenzwinkel 205 von ca. 41°. Kann der aktive Bereich 305 aufgrund der Kontrastblende 301 kein remittiertes Licht 204 aus dem Luft-Glas-Übergang mehr detektieren, können mit einem solchen Direktsensor keine Dokumente 105 aufgenommen werden. In Folge dessen ist es hilfreich, die Ausgestaltung der Kontrastblende 301 so zu wählen, dass noch mindestens Anteile des remittierten Lichts 204 aus dem Luft-Glas-Übergang detektiert werden können, um immer noch die Aufnahme von Dokumenten 105, wie Pässen, Führerscheinen, Visitenkarten, etc., zu ermöglichen.

Dies zeigt, dass der konkrete Anwendungsfall die tatsächliche Ausgestaltung der Kontrastblende 301 definiert, um beispielsweise die Aufnahme von verschiedenen sicherheitsrelevanten Objekten, inklusive Dokumenten 105, zu ermöglichen, die Bildentstehungsprozesse hinsichtlich benötigter Lichtstärke des Beleuchtungslichts 201 effizient zu gestalten oder den Kontrast für die Aufnahme eines bestimmten Objekts zu optimieren. Wird beispielsweise der Überstand 501 der Kontrastblende 301 aus Fig. 9, Teilabbildung (a) so gewählt, dass gerade noch der Grenzwinkel 206 vom Haut-Glas-Übergang (ca. 65°) detektiert werden kann, ist der Kontrast bei der Aufnahme von Hautabdrücken zwar sehr gut, jedoch verringert sich die insgesamt detektierbare Lichtstärke pro lichtempfindlichem Element 303 sehr stark. Um den Verlust an Lichtstärke zu kompensieren und das Signal-Rausch-Verhältnis zu verbessern, muss folglich die Lichtstärke des Beleuchtungslichts 201 erhöht werden. Gerade im Bereich mobiler Anwendungen ist jedoch eine effiziente, energiesparende Ausgestaltung der Vorrichtung von Vorteil, um beispielsweise die Akkulaufzeiten eines Gerätes mit der erfindungsgemäßen Vorrichtung zu erhöhen.

In Fig. 9 sind in den Teilabbildungen (b), (c), (d) weitere Ausführungsformen von Kontrastblenden 301 und aktiven Bereichen 305 schematisch dargestellt. Die Teilabbildungen (b), (c), (d) stellen Ausführungsbeispiele dar, in denen runde (vorzugsweise kreisförmige) Flächen sowohl für die Kontrastblende 301 als auch für den aktiven Bereich 305 verwendet werden, aber auch quadratische oder ähnliche Flächenformen der Kontrastblende 301 mit runden (kreisförmigen) Flächen des aktiven Bereichs 305 oder umgekehrt kombiniert sind, wie in Fig. 9 in den Teilabbildungen (c) und (d) gezeigt.

In Teilabbildung (b) von Fig. 9 ist eine besonders bevorzugte Ausführungsform dargestellt, bei der sowohl der aktive Bereich 305 als auch die Kontrastblende 301 rund sind und dadurch der Überstand 501 in allen Richtungen parallel zur Sensorschicht 406 und somit die Lichtblockierung für alle Richtungen gleich groß ist.

In mobilen Anwendungen (z. B. Einsatz in Handys, Tablets, etc.) besteht zudem ein Bedarf an ausreichend dicken Deckschichten 401, da diese einen verbesserten mechanischen und chemischen Schutz für den Direktsensor garantieren. Durch die Vergrößerung des Abstands zwischen Sensorschicht 406 und Auflagefläche 102, beispielsweise durch eine dickere Deckschicht 401, werden jedoch Informationen von einem Objektpunkt gleichzeitig in mehreren lichtempfindlichen Elementen 303 detektiert. Eine Verringerung des Kontrasts und der Auflösung ist die Folge. Da in der erfindungsgemäßen Lösung bevorzugt von den Hautbergen 103 remittiertes Licht 204 detektiert wird, d. h. Licht aus dem Differenzwinkel 207 zwischen dem Grenzwinkel 205 des Luft-Deckschicht-Übergangs (41° für BK7) und dem Grenzwinkel 206 des Haut-Deckschicht-Übergangs (65° für BK7), trifft dieselbe Objektinformation bereits ab einem Objekt-zu-Sensor-Abstand von weniger als 25 μm auf mindestens zwei lichtempfindliche Elemente 303.

Durch eine bevorzugte Ausführungsform der Kontrastblende 301, wie sie in Fig. 9 in der Teilabbildung (e) zu sehen ist, wird bei Vergrößerung der Dicke der Deckschicht 401 gleichzeitig ein hoher Kontrast und eine hohe Auflösung erreicht. Die Kontrastblende 301 ist hierbei so angeordnet, dass nur ein Teil des Lichtkegels des von der Haut erzeugten Streulichts 203 im aktiven Bereich 305 des lichtempfindlichen Elements 303 als remittiertes Licht 204 detektiert wird. Die Kontrastblende 301 ist hierzu als ein Rechteck asymmetrisch über dem aktiven Bereich 305 angeordnet. Die Kontrastblende 301 weist in drei Richtungen einen so großen Überstand 501 auf, dass das vom Finger 101 remittierte Licht 204 (hier nicht gezeichnet), das aus drei Richtungen auf den aktiven Bereich 305 einfallen würde, komplett geblockt wird, und zeigt in einer vierten Richtung des Pixelrasters einen minimalen Überstand 505 (der auch gegen Null gehen kann), sodass nur schräg einfallendes Licht aus der vierten Richtung die Kontrastblende 301 beim minimalen Überstand 505 passieren kann und im aktiven Bereich 305 des lichtempfindlichen Elements 303 erfasst wird.

Auch hier gilt, wie schon weiter oben beschrieben, je mehr Lichtwege zugunsten eines guten Kontrasts und einer guten Auflösung eingeschränkt werden, desto größer muss die Lichtstärke des Beleuchtungslichts 201 sein, um ein gutes Signal-Rausch-Verhältnis zu erreichen. Aus diesem Grund kann es von Vorteil sein, wenn die Kontrastblende 301 in einer Richtung keinen oder nur einen minimalen Überstand 505 aufweist, wie in Teilabbildung (e) von Fig. 9 illustriert.

Fig. 9 zeigt in der Teilabbildung (f) eine bevorzugte Ausführungsform, bei der die Kontrastblende 301 nur in zwei um 90° versetzten Richtungen des Pixelrasters einen großen Überstand 501 aufweist, sodass von dort kein Licht mehr den aktiven Bereich 305 erreicht. In den beiden anderen Richtungen weist die Kontrastblende 301 einen minimalen Überstand 505 auf, der gegen Null gehen kann. Der Vorteil dieser Ausführungsform ist, dass die Auflösung bzw. die CTF (contrast transfer function) in vertikaler und horizontaler Richtung gleich gut verbessert wird.

Teilabbildung (g) von Fig. 9 zeigt eine Ausgestaltung, bei der die Form und Fläche des aktiven Bereichs 305 den Überstand 501 der Kontrastblende 301 definiert. Der aktive Bereich 305 wurde auf eine bestimmte Fläche reduziert, bei der an jedem Punkt dieser Fläche noch remittiertes Licht 204 auftreffen kann. Durch die Verkleinerung der Fläche des aktiven Bereichs 305 wird die Detektion von störendem Streulicht 203 verringert, das zwischen Diodenblende 302 und Kontrastblende 301 propagiert. Dies führt zu einer weiteren Kontrastverbesserung.

Die Kontrastblende 301 und der aktive Bereich 305 können prinzipiell eine freie Form aufweisen und müssen nicht zwingend ein Quadrat, Rechteck oder Kreis sein. Weitere bevorzugte Varianten der Anordnung von Kontrastblenden 301 sind in Fig. 9 in den Teilabbildungen (h), (i), (j), (k) dargestellt und zeigen, dass die Kontrastblenden 301 auch Ausnehmungen in Form von Kerben 502 (Spalten, Schlitzen oder Ähnlichem) aufweisen können.

In Fig. 9 zeigt Teilabbildung (h) eine Ausführungsform, in der die Kontrastblende 301 so ausgestaltet ist, dass sie einen großen Überstand 501 in drei um 90° versetzten Richtungen innerhalb der Kontrastblendenschicht 403 aufweist und in der vierten Richtung einen minimalen Überstand 505, der durch eine Kerbe 502 mit definiertem Kerbwinkel 503 und definierter Kerbtiefe 504 beschrieben ist. Je kleiner der Kerbwinkel 503 ist, desto mehr wird die Auflösung verbessert, da ein kleinerer Winkelbereich des remittierten Lichts 204 detektiert wird. Je größer die Kerbtiefe 504 beziehungsweise je kleiner der minimale Überstand 505 ist, desto größer ist zwar die detektierte Lichtstärke, aber durch die zusätzliche Aufnahme von Streulicht 203 aus den mit Luftspalt 106 aufliegenden Hautbereichen (Hauttälern 104) verschlechtert sich auch der Kontrast zwischen Hautbergen 103 und Hauttälern 104.

Die Teilabbildungen (i), (j), (k) von Fig. 9 zeigen besonders bevorzugte Ausführungsformen mit quadratischen bzw. runden Flächenformen, bei denen die Kontrastblende 301 über einer Ecke des lichtempfindlichen Elements 303 eine Kerbe 502 aufweist. Der Vorteil dieser Ausführungsformen besteht darin, dass die Auflösung in zwei Dimensionen (x- und y-Dimension des Pixelrasters) gleichmäßig verbessert wird, da die Symmetrieachse 506 der Anordnung mit genau 45° in der x-y-Ebene des Pixelrasters verläuft. Die Auflösung und der Kontrast lassen sich mit solchen Ausführungsformen erheblich verbessern. In einer vereinfachten Gestaltung von Fig. 9, Teilabbildung (k), beschreibt die Ausnehmung die Flächenform eines Tortenstücks, wie dies als geometrisch vollständiger Kreissektor bereits in Fig. 8c gezeigt wurde. Dabei verläuft die Kerbe 502 in Teilabbildung (k) von Fig. 9 nicht bis über den aktiven Bereich 305, womit ein minimaler Überstand 505 (hier nicht bezeichnet) der Kontrastblende 301 verbleibt und der aktive Bereich 305 vollständig abgedeckt ist. Die Ausnehmung in Form des Tortenstücks ist dann durch eine Kerbtiefe 504 (nur in Fig. 8b-8d eingezeichnet) beschrieben, die in Teilabbildung (k) etwa dem halben Radius der Kontrastblende 301 entspricht. Ein Vorteil einer solchen Ausführung ist die einfache Geometrie und ein verbesserter Kontrast bei Hautaufnahmen, während die Ausführung der Kerbe 502 gemäß Fig. 8c mit einer Kerbtiefe 504, die einen Teil der Abdeckung des aktiven Bereichs 305 öffnet, Bildaufnahmen mit hohem Kontrast sowohl von Fingern 101 als auch von Dokumenten 105 ermöglicht.

In der Teilabbildung (l) von Fig. 9 ist eine Kontrastblende 301 mit einem Loch 507 über dem aktiven Bereich 305 dargestellt. Wie schon weiter oben beschrieben, kann die Kontrastblende 301 Ausnehmungen, zum Beispiel Löcher 507 oder Schlitze 508, aufweisen, um noch Anteile von remittiertem Licht 204 aus dem Übergang von Luft zu Deckschicht 401 detektieren zu können und eine gut aufgelöste Aufnahme von Dokumenten 105 zu ermöglichen. Dabei ist es beliebig, an welcher Position die Kontrastblende 301 über dem aktiven Bereichs 305 eine lokale Ausnehmung aufweist. Diese dient in erster Linie der hochaufgelösten und kontrastreichen Aufnahme von Dokumenten 105, ohne dass der Kontrast eines mit derselben Konfiguration aufgenommenen Hautbereiches eines Fingers 101 wesentlich beeinträchtigt wird. Selbstverständlich lässt sich die Ausführungsform von Teilabbildung (l) auch mit den bereits beschriebenen Ausführungsformen der Kontrastblenden 301 kombinieren.

Eine Ausnehmung in der Kontrastblende 301, wie beispielsweise ein Schlitz 508 oder ein Loch 507, lässt sich darüber hinaus in weiteren Ausgestaltungen zur Homogenisierung der Ausleuchtung der aktiven Bereiche 305 der lichtempfindlichen Elemente 303 nutzen, wie in Fig. 9 in den Teilabbildungen (m), (n), (o) dargestellt.

Bei der Blendenherstellung durch beispielsweise photolithographische Prozesse können Fertigungstoleranzen auftreten, wodurch die Positionierung zwischen Kontrastblende 301 und aktivem Bereich 305 Schwankungen unterliegt. Um daraus resultierende Ungleichförmigkeiten der Empfindlichkeiten der Pixel 307 untereinander zu kompensieren, ist ein großer Abstand zwischen Kontrastblende 301 und aktivem Bereich 305 durch eine dicke Abstandsschicht 404 zweckmäßig.

Die Abstandsschicht 404 hat deshalb eine bevorzugte Dicke zwischen 0,5 μm und 50 μm, besonders bevorzugt liegt die Dicke im Bereich von 1 μm bis 10 μm, wie schon weiter oben erwähnt. Für eine dicke Abstandsschicht 404 sind jedoch längere Prozesszeiten einzuplanen, weshalb dieser Lösungsansatz teuer sein kann.

Weitere Maßnahmen zur Kompensation von im Fertigungsprozess entstehenden Positionsungenauigkeiten der Blendenschichten, Kontrastblendenschicht 403 und Diodenblendenschicht 405, sind in Fig. 9 in den Teilabbildungen (m), (n), (o) dargestellt und führen zu einer verbesserten Unempfindlichkeit gegenüber Positionsabweichungen der Blendenschichten. Diese Anordnungen zeigen Ausnehmungen als Loch 507 oder Schlitz 508, die sich - im Unterschied zu Teilabbildung (l) von Fig. 9 - nicht über dem aktiven Bereich 305 befinden. Der aktive Bereich 305 detektiert also nur Licht, das schräg durch die Ausnehmungen der Kontrastblende 301 einfällt. Durch die Anordnung der Kontrastblenden 301 werden ein erster minimaler Winkel und ein zweiter maximaler Winkel des remittierten Lichts 204 definiert, zwischen denen remittiertes Licht 204 im aktiven Bereich 305 detektiert werden kann. Vorzugsweise ist der ausgenommene Bereich der Kontrastblende 301 so ausgebildet, dass nur remittiertes Licht 204 mit Winkeln zwischen 60° und 35° zum Lot 208 der Auflagefläche 102 und besonders bevorzugt zwischen 55° und 51° detektiert wird. Hierdurch wird die Empfindlichkeit der lichtempfindlichen Elemente 303 gleichförmiger, falls Fertigungsungenauigkeiten vorhanden sind. Wie schon weiter oben beschrieben, kann dies auch mit unterschiedlichen geometrischen Flächenformen der Kontrastblende 301, des aktiven Bereichs 305 und von Ausnehmung der Kontrastblende 301 umgesetzt werden.

Die Kontrastblenden 301, die in Fig. 9, in den Teilabbildungen (m), (n) dargestellt sind, lassen geringfügig zusätzliche Einfallswinkel zu, aus denen Licht detektiert werden kann und begrenzen diese auf einen schmalen Bereich entlang der eingezeichneten Symmetrieachse 506, wodurch eine zusätzliche kontrast- und auflösungsverbessernde Wirkung für Dokument 105 erzielt werden kann.

Um eine kontrastverbessernde Wirkung bei der Aufnahme von Hautabdrücken zu erzielen, muss der aktive Bereich 305 des lichtempfindlichen Elements 303 - aus Richtung der Auflagefläche 102 betrachtet - zu mindestens 60% mit der jeweiligen zugeordneten Kontrastblende 301 überdeckt sein. Für eine signifikante Verbesserung des Kontrastes bei der Aufnahme von Hautabdrücken sollte diese Überdeckung mindestens 75 %, bevorzugt 90 % betragen. Bei kompletter Überdeckung (100 %) wird der Kontrast bei der Aufnahme von Hautabdrücken weiter verbessert, während die Aufnahme von Dokumenten 105 immer noch in ausreichender Qualität möglich ist. Existiert ein Überstand 501 der Kontrastblende 301 zum aktiven Bereich 305, wird der Kontrast von Hautabdrücken optimiert, aber Dokumente 105 können ohne weitere Maßnahmen (von mindestens singulären Ausnehmungen) nicht mehr in ausreichender Qualität aufgenommen werden.

In Fig. 10 ist die vollständige Integration der erfindungsgemäßen Vorrichtung in ein mobiles Gerät in der Seitenansicht und Draufsicht schematisch dargestellt. Ein mobiles Gerät kann zum Beispiel ein Handy 308 oder ein Tablet sein, in das - neben einer Elektronikschicht 410 mit den üblichen elektronischen Komponenten (z. B. W-LAN, Batterie, RFID, USB, CPU etc.) - die erfindungsgemäße Vorrichtung integriert ist, wobei hierdurch die Oberseite des Handys 308 mit der Deckschicht 401 der erfindungsgemäßen Vorrichtung abschließt und auf die dadurch vorliegende Auflagefläche 102 aufgelegte Objekte, wie zum Beispiel ein oder mehrere Finger 101 und/oder ein Dokument 105, in hoher Qualität, das heißt mit gutem Kontrast (> 50 %) und hoher Auflösung (≥ 500 ppi), aufgenommen werden können. Für qualitativ hochwertige Aufnahmen finden die entsprechenden bereits oben beschriebenen Ausführungsformen der Kontrastblende 301 in Kombination mit geeignet gestalteten aktiven Bereichen 305 der lichtempfindlichen Elemente 303 Anwendung.

Die Integration des optischen Direktsensors mit der schon in den vorherigen Figuren beschriebenen Schichtenfolge findet auf Bereichen der Anzeigefläche (Display) des mobilen Geräts und besonders bevorzugt auf der gesamten Anzeigefläche statt. Hierzu befindet sich das Display zur Anzeige von Nutzerinformationen und zum Aussenden von Beleuchtungslicht 201 unterhalb der Schichtenfolge des optischen Direktsensors. Besonders bevorzugt ist das Display in Form von Punktlichtquellen 306, die in die Sensorschicht 406 zwischen den lichtempfindlichen Elementen 303 integriert sind, realisiert, für das alle Erläuterungen zu den Zeichnungen Fig. 2a, Fig. 2b und Fig. 5 anwendbar und zutreffend sind. Aufgrund der mit dieser Ausgestaltungvariante realisierbaren geringeren Dicke der Schichtenfolge des optischen Direktsensors ist auch das als beispielhafter Vertreter beliebiger mobiler Geräte ausgewählte Handy 308 insgesamt in flacher Bauweise ausführbar.

Bezugszeichenliste

| | |
|---|---|
| 101 | Finger |
| 102 | Auflagefläche |
| 103 | Hautberg (Papillarleiste) |
| 104 | Hauttal (Papillartal) |
| 105 | Dokument |
| 106 | Luftspalt (im Hauttal, unter Dokument) |
| 201 | Beleuchtungslicht |
| 202 | Streulicht |
| 203 | Streulicht in Richtung der Auflagefläche |
| 204 | (remittiertes) Licht |
| 205 | Grenzwinkel (Luft-zu-Deckschicht) |
| 206 | Grenzwinkel (Haut-zu-Deckschicht) |
| 207 | Differenzwinkelbereich |
| 208 | Lot zur Auflagefläche |
| 301 | Kontrastblende |
| 302 | Diodenblende |
| 303 | lichtempfindliches Element |
| 304 | Durchlassbereich |
| 305 | aktiver Bereich |
| 306 | Punktlichtquelle |
| 307 | Pixel |
| 308 | Handy |
| 401 | Deckschicht |
| 402 | Adhäsionsmittelschicht |
| 403 | Kontrastblendenschicht |
| 404 | Abstandsschicht |
| 405 | Diodenblendenschicht |
| 406 | Sensorschicht |
| 407 | Substrat |
| 408 | Luftschicht |
| 409 | Beleuchtungsschicht |
| 410 | Elektronikschicht |
| 411 | (vollflächige) Spektralfilterschicht |
| 412 | (strukturierte) Spektralfilterschicht |
| 501 | Überstand |
| 502 | Kerbe |
| 503 | Kerbwinkel |
| 504 | Kerbtiefe |
| 505 | minimaler Überstand |
| 506 | Symmetrieachse |
| 507 | Loch |
| 508 | Schlitz |

**Patentansprüche**

1. Vorrichtung zur optischen Direktaufnahme von Objekten zur Identifikation von Personen, insbesondere von Hautabdrücken, und/oder von einer identifizierten Person zugeordneten Objekten, mit einer Schichtenfolge enthaltend:

  - eine Deckschicht (401) mit einer Auflagefläche (102) für ein aufzunehmendes Objekt (101, 105),
  - eine Blendenschicht mit nicht transparenten und transparenten Bereichen zur Einschränkung von Einfallswinkeln von Licht, das vom aufzunehmenden Objekt (101, 105) durch die Auflagefläche (102) in die Schichtenfolge remittiert wird,
  - eine Sensorschicht (406) mit in einem zweidimensionalen Raster angeordneten Pixeln (307), die jeweils ein lichtempfindliches Element (303) und einen transparenten Durchlassbereich (304) aufweisen, wobei die lichtempfindlichen Elemente (303) nur aus Richtung der Auflagefläche (102) kommendes Licht detektieren können,
  - ein Substrat (407) als Träger der Schichtenfolge und
  - eine Beleuchtungsschicht (409) zum Aussenden von Beleuchtungslicht (201), das durch die Auflagefläche (102) hindurch das Objekt (101, 105) beleuchtet,
  **dadurch gekennzeichnet, dass**
  - die Blendenschicht als eine Kontrastblendenschicht (403) für einen überwiegenden Durchlass von unter großen Einfallswinkeln einfallendem Licht, das von auf der Auflagefläche (102) ohne Luftspalt (106) aufliegenden Teilen des Objekts (101, 105) remittiert wird, ausgebildet ist, wobei

    • jedem lichtempfindlichen Element (303) der Sensorschicht (406) jeweils genau eine Kontrastblende (301) als nicht transparenter Bereich der Kontrastblendenschicht (403) zugeordnet ist,
    • die zugeordnete Kontrastblende (301) über einem aktiven Bereich (305) des lichtempfindlichen Elements (303) mit einem Abstand angeordnet ist und eine nicht transparente Fläche aufweist, die mindestens so groß ist wie der aktive Bereich (305) des lichtempfindlichen Elements (303) und
    • die Kontrastblende (301) mit Abstand über dem aktiven Bereich (305) des lichtempfindlichen Elements (303) so angeordnet ist, dass, aus Richtung der Auflagefläche (102) betrachtet, der aktive Bereich (305) des lichtempfindlichen Elements (303) zu mindestens 60 % überdeckt ist,

    - die Beleuchtungsschicht (409) eine Vielzahl von Punktlichtquellen (306) enthält, die in Richtung der Auflagefläche (102) in einem derart beschränkten Winkelbereich emittieren, um interne Totalreflexion an der Auflagefläche (102) der Deckschicht (401) zu unterdrücken.

2. Vorrichtung nach Anspruch 1, **dadurch gekennzeichnet, dass** die zugeordnete Kontrastblende (301) über dem aktiven Bereich (305) des lichtempfindlichen Elements (303) so angeordnet ist, dass, aus Richtung der Auflagefläche (102) betrachtet, der aktive Bereich (305) des lichtempfindlichen Elements (303) zu mindestens 75%, bevorzugt mindestens 90%, überdeckt ist.

3. Vorrichtung nach Anspruch 1, **dadurch gekennzeichnet, dass** die zugeordnete Kontrastblende (301) über dem aktiven Bereich (305) des lichtempfindlichen Elements (303) so angeordnet ist, dass, aus Richtung der Auflagefläche (102) betrachtet, der aktive Bereich (305) des lichtempfindlichen Elements (303) vollständig überdeckt ist.

4. Vorrichtung nach einem der Ansprüche 1 bis 3, **dadurch gekennzeichnet, dass** die Kontrastblende (301) über dem aktiven Bereich (305) des lichtempfindlichen Elements (303) so ausgebildet ist, dass die Kontrastblende (301) in mindestens zwei um 90° versetzten Richtungen des Pixelrasters einen Überstand (501) gegenüber dem aktiven Bereich (305) aufweist.

5. Vorrichtung nach einem der Ansprüche 1 bis 4, **dadurch gekennzeichnet, dass** die Kontrastblende (301) eine zu dem aktiven Bereich (305) des lichtempfindlichen Elements (303) parallele, geometrisch ähnliche Fläche mit gleicher Ausrichtung im Sinne einer Zentralprojektion aufweist.

6. Vorrichtung nach einem der Ansprüche 1 bis 4, **dadurch gekennzeichnet, dass** die Kontrastblende (301) und der aktive Bereich (305) des lichtempfindlichen Elements (303) parallele, geometrische Flächen mit voneinander abweichender Form aufweisen.

7. Vorrichtung nach einem der Ansprüche 1 bis 6, **dadurch gekennzeichnet, dass** die Flächen der Kontrastblenden (301) gegenüber den aktiven Bereichen (305) der lichtempfindlichen Elemente (303) einen Überstand (501) aufweisen, der in seiner Größe eingestellt ist in Abhängigkeit von der Brechzahl der Deckschicht (401), von dem Abstand der Kontrastblenden (301) über dem aktiven Bereich (305) der lichtempfindlichen Elemente (303) und von der Form der Kontrastblende (301) und des aktiven Bereichs (305) des lichtempfindlichen Elements (303).

8. Vorrichtung nach einem der Ansprüche 1 bis 7, **dadurch gekennzeichnet, dass** die Kontrastblendenschicht (403) zwei oder mehrere verschiedene Kontrastblenden (301) abwechselnd und versetzt zueinander in einem mit dem Pixelraster übereinstimmenden Raster über den aktiven Bereichen (305) der lichtempfindlichen Elemente (303) aufweist, um verschiedene Aufnahmemodi für Aufnahmen von unterschiedlichen Objekten (101, 105) realisieren zu können.

9. Vorrichtung nach einem der Ansprüche 4 bis 8, **dadurch gekennzeichnet, dass** die Kontrastblende (301) in mindestens zwei um 90° versetzten Richtungen innerhalb der Kontrastblendenschicht (403) einen gleichen Überstand (501) gegenüber dem aktiven Bereich (305) des lichtempfindlichen Elements (303) und in mindestens einer gegenüberliegend zu den um 90° versetzten Richtungen mit gleichem Überstand einen geringeren Überstand (505), der gegen Null gehen kann, aufweist, um eine Aufnahme mit erhöhter Auflösung zu erreichen und die Aufnahme von Dokumenten (105) als Objekte (101, 105) zu verbessern.

10. Vorrichtung nach einem der Ansprüche 1 bis 9, **dadurch gekennzeichnet, dass** der Abstand der Kontrastblenden (301) zu den lichtempfindlichen Elementen (303) mittels einer zusätzlichen Abstandsschicht (404) wählbarer Schichtdicke eingestellt ist.

11. Vorrichtung nach Anspruch 10, **dadurch gekennzeichnet, dass** der Abstand der Kontrastblenden (301) über den lichtempfindlichen Elementen (303) in einem Bereich von 0,5 $\mu$m bis 50 $\mu$m wählbar, aber fest eingestellt ist.

12. Vorrichtung nach einem der Ansprüche 1 bis 11, **dadurch gekennzeichnet, dass** die Beleuchtungsschicht (409) als eine unterhalb der Sensorschicht (406) mit einer Zwischenschicht oder einer Luftschicht (408) an die Schichtenfolge gekoppelte großflächige Hintergrundbeleuchtung ausgebildet ist.

13. Vorrichtung nach einem der Ansprüche 1 bis 11, **dadurch gekennzeichnet, dass** die Beleuchtungsschicht innerhalb der Sensorschicht (406) als versetzt in den Durchlassbereichen der Pixel (307) singulär angeordnete, mit bündelbegrenzenden Blenden ausgestattete Punktlichtquellen (306) ausgebildet ist.

14. Vorrichtung nach einem der Ansprüche 1 bis 13, **dadurch gekennzeichnet, dass** die Kontrastblendenschicht (403) für den überwiegenden Durchlass von unter großen Einfallswinkeln einfallendem Licht (207), das von auf der Auflagefläche (102) ohne Luftspalt (106) aufliegenden Teilen des Objekts (101, 105) remittiert wird, und einem zusätzlichen geringen Anteil von unter kleinen Einfallswinkeln einfallendem Licht (205), der von auf der Auflagefläche (102) mit Luftspalt (106) aufliegenden Teilen des Objekts (101, 105) remittiert wird, ausgebildet ist, wobei die jeweils zugeordnete Kontrastblende (301) über dem aktiven Bereich (305) des lichtempfindlichen Elements (303) so angeordnet ist, dass - aus Richtung der Auflagefläche (102) betrachtet - der aktive Bereich (305) des lichtempfindlichen Elements (303) weitgehend überdeckt ist, und die Kontrastblende (301) innerhalb der überdeckenden nicht transparenten Fläche eine Ausnehmung (502, 507, 508) aufweist, sodass im Bereich der Ausnehmung (502, 507, 508) zusätzlich ein geringer Anteil von im Wesentlichen senkrecht auftreffendem Licht aufnehmbar ist.

15. Vorrichtung nach Anspruch 14, **dadurch gekennzeichnet, dass** die Ausnehmung in der Kontrastblende (301) eine innerhalb der den aktiven Bereich (305) des lichtempfindlichen Elements (303) überdeckenden Fläche der Kontrastblende (301) oder eine in einem zum aktiven Bereich (305) vorhandenen Überstand (501) der Kontrastblende (301) eingebrachte Ausnehmung (502, 507, 508) in Form von Kreisloch, Langloch, Schlitz, Kerbe, Sektor oder anders geformter Ausschnitt ist.

## Claims

1. A device for directly optically recording objects for the identification of persons, in particular skin prints, and/or objects assigned with an identified person, comprising a layer sequence including:

   - a cover layer (401) with a placement surface (102) for an object (101, 105) to be recorded,
   - an aperture layer with non-transparent and transparent regions for restricting angles of incidence of light which is remitted by the object (101, 105) to be recorded through the placement surface (102) into the layer sequence,
   - a sensor layer (406) with pixels (307) arranged in a two-dimensional grid, each having a light-sensitive element (303) and a transparent transmission region (304), wherein the light-sensitive elements (303) can only detect light coming from the direction of the placement surface (102),
   - a substrate (407) as carrier of the layer sequence and
   - an illumination layer (409) for emitting illumination light (201) which illuminates the object (101, 105) through the placement surface (102), **characterised in that**

- the aperture layer is formed as a contrast aperture layer (403) for a predominant transmission of light incident at large angles of incidence, which is remitted by parts of the object (101, 105) resting on the placement surface (102) without an air gap (106), wherein

> • each light-sensitive element (303) of the sensor layer (406) is assigned precisely one contrast aperture (301) as a non-transparent region of the contrast aperture layer (403),
> • the assigned contrast aperture (301) is arranged above an active region (305) of the light-sensitive element (303) at a distance and has a non-transparent area which is at least as large as the active region (305) of the light-sensitive element (303) and
> • the contrast aperture (301) is arranged at a distance above the active region (305) of the light-sensitive element (303) such that, viewed from the direction of the placement surface (102), at least 60 % of the active region (305) of the light-sensitive element (303) is covered,

- the illumination layer (409) comprises a plurality of point light sources (306) which emit in the direction of the placement surface (102) in such a limited angular range as to suppress total internal reflection at the placement surface (102) of the cover layer (401).

2. The device according to claim 1, **characterised in that** the assigned contrast aperture (301) is arranged above the active region (305) of the light-sensitive element (303) in such a way that, viewed from the direction of the placement surface (102), at least 75%, preferably at least 90%, of the active region (305) of the light-sensitive element (303) is covered.

3. The device according to claim 1, **characterised in that** the assigned contrast aperture (301) is arranged above the active region (305) of the light-sensitive element (303) in such a way that, viewed from the direction of the placement surface (102), the active region (305) of the light-sensitive element (303) is completely covered.

4. The device according to any one of claims 1 to 3, **characterised in that** the contrast aperture (301) is formed above the active region (305) of the light-sensitive element (303) in such a way that the contrast aperture (301) has a protrusion (501) relative to the active region (305) in at least two directions of the pixel grid which are offset by 90°.

5. The device according to any one of claims 1 to 4, **characterised in that** the contrast aperture (301) has a geometrically similar surface parallel to the active region (305) of the light-sensitive element (303) with the same orientation in the sense of a central projection.

6. The device according to any one of claims 1 to 4, **characterised in that** the contrast aperture (301) and the active region (305) of the light-sensitive element (303) have parallel, geometric surfaces with a different shape from one another.

7. The device according to any one of claims 1 to 6, **characterised in that** the surfaces of the contrast apertures (301) have a protrusion (501) relative to the active regions (305) of the light-sensitive elements (303), the size of which is adjusted as a function of the refractive index of the cover layer (401), of the distance of the contrast apertures (301) above the active region (305) of the light-sensitive elements (303) and of the shape of the contrast aperture (301) and of the active region (305) of the light-sensitive element (303).

8. The device according to any one of claims 1 to 7, **characterised in that** the contrast aperture layer (403) comprises two or more different contrast apertures (301) alternately and offset to each other in a grid corresponding to the pixel grid above the active regions (305) of the light-sensitive elements (303) in order to be able to realise different recording modes for recordings of different objects (101, 105).

9. The device according to any one of claims 4 to 8, **characterised in that** the contrast aperture (301) has an equal protrusion (501) relative to the active region (305) of the light-sensitive element (303) in at least two directions offset by 90° within the contrast aperture layer (403) and a smaller protrusion (505) in at least one direction opposite the directions offset by 90° with equal protrusion, which smaller protrusion (505) can approach zero, in order to achieve a recording with increased resolution and to improve the recording of documents (105) as objects (101, 105).

10. The device according to any one of claims 1 to 9, **characterised in that** the distance between the contrast apertures (301) and the light-sensitive elements (303) is set by means of an additional spacer layer (404) of selectable layer thickness.

11. The device according to claim 10, **characterised in that** the distance of the contrast apertures (301) above the light-sensitive elements (303) can be selected in a range from 0.5 μm to 50 μm, but is fixed.

12. The device according to any one of claims 1 to 11, **characterised in that** the illumination layer (409) is formed as a large-area background illumination coupled to the layer sequence below the sensor layer (406) with an intermediate layer or an air layer (408).

13. The device according to any one of claims 1 to 11, **characterised in that** the illumination layer within the sensor layer (406) is formed as point light sources (306) arranged singularly offset in the transmission regions of the pixels (307) and equipped with beam-limiting apertures.

14. The device according to any one of claims 1 to 13, **characterised in that** the contrast aperture layer (403) is designed for the predominant transmission of light (207) incident at large angles of incidence, which is remitted by parts of the object (101, 105) resting on the placement surface (102) without an air gap (106), and an additional small proportion of light (205) incident at small angles of incidence, which is emitted by parts of the object (101, 105) resting on the placement surface (102) with an air gap (106), wherein the respectively assigned contrast aperture (301) is arranged above the active region (305) of the light-sensitive element (303) in such a way that - viewed from the direction of the placement surface (102) - the active region (305) of the light-sensitive element (303) is largely covered, and the contrast aperture (301) has a recess (502, 507, 508) within the covering non-transparent surface, so that in the region of the recess (502, 507, 508) an additional small proportion of substantially vertically incident light can be recorded.

15. The device according to claim 14, **characterised in that** the recess in the contrast aperture (301) is a recess (502, 507, 508) in the form of a circular hole, elongated hole, slot, notch, sector or otherwise shaped cutout made within the surface of the contrast aperture (301) covering the active region (305) of the light-sensitive element (303) or in a protrusion (501) of the contrast aperture (301) present in relation to the active region (305).

**Revendications**

1. Dispositif d'enregistrement optique direct d'objets pour l'identification de personnes, en particulier d'empreintes cutanées, et/ou d'objets associés à une personne identifiée, avec une succession de couches contenant :

- une couche de couverture (401) avec une surface d'appui (102) pour un objet (101, 105) à enregistrer,
- une couche de diaphragme avec des zones non transparentes et des zones transparentes pour limiter les angles d'incidence de la lumière qui est réémise par l'objet à enregistrer (101, 105) à travers la surface d'appui (102) dans la succession de couches,
- une couche de détection (406) avec des pixels (307) disposés selon une trame bidimensionnelle, qui présentent chacun un élément photosensible (303) et une zone de transmission transparente (304), les éléments photosensibles (303) ne pouvant détecter que la lumière venant de la direction de la surface d'appui (102),
- un substrat (407) comme support de la succession de couches et
- une couche d'éclairage (409) pour émettre une lumière d'éclairage (201) qui éclaire l'objet (101, 105) à travers la surface d'appui (102),
**caractérisé en ce que**
- la couche de diaphragme est réalisée sous la forme d'une couche de diaphragme de contraste (403) pour une transmission prépondérante de lumière incidente sous de grands angles d'incidence, qui est réémise par des parties de l'objet (101, 105) reposant sur la surface d'appui (102) sans entrefer (106), où

  • à chaque élément photosensible (303) de la couche de détection (406) est associé respectivement exactement un diaphragme de contraste (301) en tant que zone non transparente de la couche de diaphragme de contraste (403),
  • le diaphragme de contraste associé (301) est placé au-dessus d'une zone active (305) de l'élément photosensible (303) à une certaine distance et présente une surface non transparente qui est au moins aussi grande que la zone active (305) de l'élément photosensible (303) et
  • le diaphragme de contraste (301) est disposé à distance au-dessus de la zone active (305) de l'élément photosensible (303) de telle sorte que, vu depuis la surface d'appui (102), la zone active (305) de l'élément photosensible (303) est recouverte à au moins 60 %,

- la couche d'éclairage (409) comprend une pluralité de sources lumineuses ponctuelles (306) qui émettent en direction de la surface d'appui (102) dans une plage angulaire limitée de manière à supprimer une réflexion interne totale sur la surface surface d'appui (102) de la couche de couverture (401).

2. Dispositif selon la revendication 1, **caractérisé en ce que** le diaphragme de contraste associé (301) est disposé au-dessus de la zone active (305) de l'élément photosensible (303) de telle sorte que, vu depuis la surface d'appui (102), la zone active (305) de l'élément photosensible (303) est recouverte à au moins 75%, de préférence à au moins 90%.

3. Dispositif selon la revendication 1, **caractérisé en ce que** le diaphragme de contraste associé (301) est disposé au-dessus de la zone active (305) de l'élément photosensible (303) de telle sorte que, vu depuis la surface d'appui (102), la zone active (305) de l'élément photosensible (303) est complètement recouverte.

4. Dispositif selon l'une quelconque des revendications 1 à 3, **caractérisé en ce que** le diaphragme de contraste (301) est formé au-dessus de la zone active (305) de l'élément photosensible (303) de telle sorte que le diaphragme de contraste (301) présente une saillie (501) par rapport à la zone active (305) dans au moins deux directions de la trame de pixels décalées de 90°.

5. Dispositif selon l'une quelconque des revendications 1 à 4, **caractérisé en ce que** le diaphragme de contraste (301) présente une surface géométriquement similaire, parallèle à la zone active (305) de l'élément photosensible (303), avec la même orientation au sens d'une projection centrale.

6. Dispositif selon l'une quelconque des revendications 1 à 4, **caractérisé en ce que** le diaphragme de contraste (301) et la zone active (305) de l'élément photosensible (303) présentent des surfaces géométriques parallèles de forme différente l'une de l'autre.

7. Dispositif selon l'une quelconque des revendications 1 à 6, **caractérisé en ce que** les surfaces des diaphragmes de contraste (301) présentent une saillie (501) par rapport aux zones actives (305) des éléments photosensibles (303), dont la taille est ajustée en fonction de l'indice de réfraction de la couche de couverture (401), de la distance des diaphragmes de contraste (301) au-dessus de la zone active (305) des éléments photosensibles (303) et de la forme du diaphragme de contraste (301) et de la zone active (305) de l'élément photosensible (303).

8. Dispositif selon l'une quelconque des revendications 1 à 7, **caractérisé en ce que** la couche de diaphragme de contraste (403) comporte deux ou plusieurs diaphragmes de contraste différents (301) alternés et décalés les uns par rapport aux autres selon une trame coïncidant avec la trame de pixels, au-dessus des zones actives (305) des éléments photosensibles (303), afin de pouvoir réaliser différents modes d'enregistrement pour des enregistrements de différents objets (101, 105).

9. Dispositif selon l'une quelconque des revendications 4 à 8, **caractérisé en ce que** le diaphragme de contraste (301) présente une saillie identique (501) par rapport à la zone active (305) de l'élément photosensible (303) dans au moins deux directions décalées de 90° à l'intérieur de la couche de diaphragme de contraste (403) et une saillie inférieure (505) dans au moins une direction opposée aux directions décalées de 90° présentant un saillie identique, qui peut tendre vers zéro, afin d'obtenir un enregistrement avec une résolution accrue et d'améliorer l'enregistrement de documents (105) en tant qu'objets (101, 105).

10. Dispositif selon l'une quelconque des revendications 1 à 9, **caractérisé en ce que** la distance entre les diaphragmes de contraste (301) et les éléments photosensibles (303) est réglée au moyen d'une couche d'écartement supplémentaire (404) d'épaisseur de couche sélectionnable.

11. Dispositif selon la revendication 10, **caractérisé en ce que** la distance des diaphragmes de contraste (301) au-dessus des éléments photosensibles (303) peut être sélectionnée dans une plage de 0,5 $\mu$m à 50 $\mu$m, mais est fixe.

12. Dispositif selon l'une quelconque des revendications 1 à 11, **caractérisé en ce que** la couche d'éclairage (409) est réalisée sous la forme d'un éclairage de fond de grande surface couplé à la succession de couches en dessous de la couche de détection (406) avec une couche intermédiaire ou une couche d'air (408).

13. Dispositif selon l'une quelconque des revendications 1 à 11, **caractérisé en ce que** la couche d'éclairage est réalisée à l'intérieur de la couche de détection (406) sous la forme de sources lumineuses ponctuelles (306) disposées de manière singulière et décalée dans les zones de transmission des pixels (307) et équipées de diaphragmes de limitation de faisceau.

14. Dispositif selon l'une quelconque des revendications 1 à 13, **caractérisé en ce que** la couche de diaphragme de contraste (403) est destinée à transmettre la majeure partie de la lumière incidente (207) sous de grands angles d'incidence, qui est réémise par des parties de l'objet (101, 105) reposant sur la surface d'appui (102) sans entrefer (106), et une petite partie supplémentaire de lumière (205) incidente sous de petits angles d'incidence, qui est réémise par des parties de l'objet (101, 105) reposant sur la surface d'appui (102) avec un entrefer (106), le diaphragme de contraste (301) respectivement associé étant disposé au-dessus de la zone active (305) de l'élément photosensible (303) de telle sorte que - vu depuis la surface d'appui (102) - la zone active (305) de l'élément photosensible (303) est largement recouverte, et le diaphragme de contraste (301) présente, à l'intérieur de la surface non transparente qui le recouvre, un évidement (502, 507, 508), de sorte que, dans la zone de l'évidement (502, 507, 508), une faible proportion de lumière incidente essentiellement perpendiculaire peut en outre être enregistrée.

15. Dispositif selon la revendication 14, **caractérisé en ce que** l'évidement dans le diaphragme de contraste (301) est un évidement pratiqué à l'intérieur de la surface du diaphragme de contraste (301) recouvrant la zone active (305) de l'élément photosensible (303), ou est un évidement (502, 507, 508) pratiqué dans une saillie (501) du diaphragme de contraste (301) présente par rapport à la zone active (305), sous la forme d'un trou circulaire, d'un trou oblong, d'une fente, d'une entaille, d'un secteur ou d'une découpe de forme différente.

**Fig. 1**

**Fig. 2a**

**Fig. 2b**

**Fig. 3**

**Fig. 4a**

**Fig. 4b**

**Fig. 5**

**Fig. 6**

Fig. 7a

Fig. 7b

Fig. 8a

Fig. 8b

Fig. 8c

Fig. 8d

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170161540 A1
- US 20170161543 A1
- US 20170161544 A1
- WO 2017045130 A1
- WO 2017063119 A1
- US 20170017824 A1
- US 20160224819 A1
- WO 2018004243 A1
- US 20190228204 A1